(19) Europäisches Patentamt
European Patent Office
Office européen des brevets

(11) EP 1 907 900 B1

(12) **EUROPEAN PATENT SPECIFICATION**

(45) Date of publication and mention of the grant of the patent:
**16.04.2014 Bulletin 2014/16**

(21) Application number: **06762180.5**

(22) Date of filing: **26.06.2006**

(51) Int Cl.:
***G02F 1/139*** *(2006.01)*

(86) International application number:
**PCT/EP2006/006136**

(87) International publication number:
**WO 2007/017008 (15.02.2007 Gazette 2007/07)**

(54) **ELECTRO-OPTICAL LIGHT MODULATION ELEMENT, DISPLAY AND MEDIUM**

ELEKTROOPTISCHES LICHTMODULATIONSELEMENT, DISPLAY UND MEDIUM

ÉLÉMENT DE MODULATION DE LUMIÈRE ÉLECTRO-OPTIQUE, AFFICHAGE ET MEDIUM

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.07.2005 EP 05016388**

(43) Date of publication of application:
**09.04.2008 Bulletin 2008/15**

(73) Proprietor: **Merck Patent GmbH**
**64293 Darmstadt (DE)**

(72) Inventors:
- **MANABE, Atsutaka**
  **64625 Bensheim (DE)**
- **BREMER, Matthias**
  **64295 Darmstadt (DE)**

(56) References cited:
**WO-A-2005/096085 DE-A1- 2 644 219**
**US-A- 4 099 857**

- **MARGERUM J D ET AL: "Effects of molecular length on nematic mixtures. II. Anisotropic and dynamic scattering properties of 4-alkoxyphenyl 4-alkylcyclohexanecarboxylate mixtures" MOLECULAR CRYSTALS AND LIQUID CRYSTALS, vol. 68, 1981, pages 157-174, XP009071285 Gordon and Breach, UK ISSN: 0026-8941**
- **TAKEDA A ET AL: "41.1: A Super-High Image Quality Multi-Domain Vertical Alignment LCD by New Rubbing-Less Technology" INTERNATIONAL PROCEEDINGS OF THE SID. DIGEST OF TECHNICAL PAPERS, SOCIETY FOR INFORMATION DISPLAY, LOS ANGELES, US, 17 May 1998 (1998-05-17), pages 1077-1080, XP007008682**
- **PRADHAN N K ET AL: "Bend and splay elastic constants and diamagnetic susceptibility anisotropies of four mesogenic cyclohexane carboxylates" MOLECULAR CRYSTALS AND LIQUID CRYSTALS, vol. 366, 2001, pages 2009-2016, XP009071286 Gordon & Breach Switzerland ISSN: 1058-725X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 907 900 B1

## Description

### Field of the invention

The present invention relates to light modulation elements and to displays containing the same. The light modulation elements use modulation media with negative dielectric anisotropy, which have a cybotactic nematic phase at the operation temperature of the elements.

The present invention relates to electro-optical light modulation elements and to electro-optical displays and display systems containing elements of this type, such as, for example, television screens and computer monitors. The light modulation elements according to the invention contain a mesogenic modulation medium having a negative dielectric anisotropy, which is in the cybotactic nematic phase during operation of the light modulation elements and are particularly distinguished by very short response times in addition to good contrast and low viewing-angle dependence.

The present invention furthermore relates to liquid crystalline media with a negative dielectric anisotropy having a cybotactic nematic phase and to the use thereof as modulation media in light modulation elements.

### Object and prior art

Conventional electro-optical liquid-crystal displays are known in general terms. They are operated at a temperature at which the modulation medium is in a mesophase, typically and predominantly in the nematic phase. But there are also displays which use liquid crystals in a smectic phase, e.g. in the chiral smectic C ($S_C$) phase, like SSFLC surface stabilised ferroelectric liquid crystal) displays or in the smectic A ($S_A$) phase, e.g. thermally addressed displays. Especially SSFLC and anti-ferroelectric displays show extremely good, fast response, however, they are rather difficult to produce. Further, anti-ferroelectric displays are generally very sensitive to mechanical shock.

The most widely spread displays are TN ("twisted nematic") and STN ("super twisted nematic") displays. The liquid-crystal cells in these displays have electrodes on the substrates on the two opposite sides of the liquid-crystal medium. The electric field is thus essentially perpendicular to the liquid-crystal layer. The first-mentioned displays in particular are used in combination with TFT (thin film transistor) addressing for displays having a large information content and high resolution, for example in laptop and notebook computers. Use has recently increasingly been made, in particular in desktop computer monitors, of liquid-crystal displays of the IPS (in-plane switching, for example DE 40 00 451 and EP 0 588 568) type or alternatively of the VAN (vertically aligned nematic) type. VAN displays are a variant of the ECB (electrically controlled birefringence) displays. In a modern variant of the ECB displays, the MVA (multidomain vertically aligned) displays, a plurality of domains are stabilised per addressed electrode, and in addition a special optical compensation layer is used. These displays, like the TN displays already mentioned, use an electric field perpendicular to the liquid-crystal layer. In contrast thereto, IPS displays generally use electrodes on only one substrate, i.e. on one side of the liquid-crystal layer, i.e. are characterised by a significant component of the electric field parallel to the liquid-crystal layer.

In common electro-optical switching elements exploiting electro-optical effects in mesogenic modulation media the response time depends on the relevant viscosity coefficient of the modulation medium. The response time for switching off ($\tau_{off}$) depends on the respective elastic constant or combination of elastic constants. For example in the almost ubiquitous TN displays the response time for switching off is proportional to the rotational viscosity of the liquid crystal ($\gamma_1$) and inversely proportional to the respective term of the elastic constants (K) as shown by the following formula:

$$\tau_{off} \sim \gamma_1 / K ,$$

wherein for VA-displays as a first approximation

$$K \approx k_3 ,$$

$k_3$ : bend elastic constant.

The present invention had the object of developing light modulation elements, which switch particularly quickly. These light modulation elements should have the lowest possible layer thickness in order to allow to realise the smallest possible response time of the modulation media in order to be able to be employed as elements in FPDs (flat panel displays), such as, for example, flat panel screens for computers. In case, however, that the diffraction efficiency should be optimised, the cell gap should be chosen to be comparatively large. The displays should furthermore be addressable

by means of a simple electrode configuration and have a relatively low operating voltage. In addition, they should have good contrast with low viewing-angle dependence for use in electro-optical displays.

Liquid crystals having a nematic phase may show a cybotactic order. In this phase the molecules have a short-range smectic-like arrangement, as defined in Pure and Applied Chemistry, 73, (2001), pp, 845 to 895, see especially point 3.1.2, p. 855. Liquid crystals having a cybotactic nematic phase have been investigated with respect to their general properties e.g. by Bobadova-Parvanova, P. et al. Cryst. Res. Technol., 35, (2000), pp. 1321-1330 and by Lüning, J. et al., Macromolecules, 34, (2001), pp. 1128-1130. Stojadinovich, S. et al., Physical Review E, 66, (2002), pp. 060701-1 to 060701-4 investigated the dynamic behaviour of a nematic phase of a bent-core liquid-crystal showing a cybotactic order also referred to as a cybotactic phase here. In that reference dynamic light scattering experiments have been performed to determine the dynamics of the relaxation processes in this phase.

DE 26 44 219 describes dielectrically positive liquid crystals with "cybotactic groups" occurring in mixtures of compounds, which lead to induced smectic phases, for dynamic scattering displays.

EP 1 352 943 teaches nematic liquid crystalline media for ECB and IPS displays.

WO 2005/096085 A, published after the priority date of the instant application, describes liquid crystal displays operating in the TN-mode comprising media having a cybotactic phase and is giving exemplary media having positive dielectric anisotropy. It also mentions liquid crystalline media having a negative dielectric anisotropy.

Margerum, J.D. et al. "Effects of molecular length on nematic mixtures. II. Anisotropic and dynamic scattering properties of 4-alkoxyphenyl 4-alkylcyclohexanecarboxylate mixtures", Molecular Crystals and Liquid Crystals, 68, (1981), pages 157-174 discloses liquid crystalline mixtures of 4-alkoxyphenyl *trans*-4-alkylcyclohexanecarboxylates having a negative dielectric anisotropy and, dependent of their composition, some of them showing showing a cybotactic character.

U.S.P. 4,099,857 proposes the use of fleetingly appearing cybotactic zones in a liquid phase prior to the onset of the transition to the nematic phase to create rapidly vanishing images.

Takeda, A. et al., "A Super-High Image Quality Multi-Domain Vertical Aligned LCD by New Rubbing-Less technology", International Proceedings of the SID, Digest of technical Papers, SID, Los Angeles, (1998), pages 1077-1080 discloses a light modulation element, wherein the modulation medium has a negative dielectric anisotropy

Thus, there is a demand for improved light modulation elements, in particular for use in displays having short response times, as are necessary, for example, in multimedia applications.

## Present invention

Surprisingly, it has been found that light modulation elements according to claim 1 enable the production of excellent displays.

The electrode arrangement of these light modulation elements is able to generate an electric field.

In general, the contrast, the viewing angle of the contrast and the operation voltage of these light modulation elements are excellent. Most strikingly, however, the response times of these light modulation elements are, in particular, very small.

The mesogenic medium is used as modulation medium of the light modulation element. In the present application, the term mesogenic media is applied to media, which have a mesophase, are soluble in a mesophase or induce a mesophase. The media according to the present invention, respectively the media used according to the present invention, have a smectic or, preferably, a nematic phase and they exhibit a cybotactic nematic phase.

The medium used for investigating the mesogenic properties of materials, i.e. compounds components, like e.g. pre-mixtures and media, which do not have a mesophase of their own is preferably the nematic mixture ZLI-4792 from Merck KGaA, Darmstadt, Germany. The mesogenic materials preferably have a clearing point, extrapolated from 10% solution in this mixture, of 0°C or above, particularly preferably of 20°C or above and very particularly preferably of 40°C or above.

The light modulation elements according to the invention contain a mesogenic modulation medium which is in the cybotactic nematic phase at the operating temperature or at least at one of the operation temperatures of the light modulation elements.

This medium is advantageously located on or below one substrate. In general, the mesogenic medium is located between two substrates. If the mesogenic medium is located between two substrates, at least one of these substrates is light-transparent. The light-transparent substrate or the light-transparent substrates may, for example, consist of glass, quartz or plastic. If a non-light-transparent substrate is used, this may consist, inter alia, of a metal or a semiconductor. These media can be used as such or can be located on a support, for example a ceramic.

The light modulation elements according to the present invention have an electrode structure, which generates an electric field having a significant component, preferably a predominant component, perpendicular to the main plain of layer of the mesogenic medium. This electrode structure may be designed in the conventional form. It preferably comprises active addressing elements in order to allow addressing of the displays by means of an active matrix. Active

matrix displays of this type use a matrix of active addressing elements preferably one each assigned to each one of the individual light modulation elements. These active addressing elements have a non-linear current-voltage characteristic line, such as, for example, TFTs or MIM (metal insulator metal) diodes.

The electrodes may consist of transparent material, such as, for example, indium tin oxide (ITO). In this case, it may be advantageous and in some cases even necessary to cover a part or parts of the light modulation element by means of a black mask. This allows areas in which the electric field is not effective, as well as areas where constituents of the light modulation elements, e.g. the active addressing elements, are light sensitive, to be screened off and the contrast, respectively the performance of the light modulation elements thus improved. However, the electrodes may also consist of opaque material, usually metal. In this case, the use of a separate black mask may, if desired, be omitted.

In a preferred embodiment, the sub-structures of the electrode structure are located on the two opposite sides of the mesogenic medium. In this case, the corresponding parts of the electrodes are preferably located at the opposite sides of the light modulation medium perpendicular to one another or at least overlapping each other to a significant extent, preferably to a predominant extent and most preferably essentially completely viewed perpendicularly from the main plane of the light modulation element.

The operating temperature of the light modulation element is above the transition temperature of the modulation medium, generally from the solid phase or from a smectic phase into the cybotactic phase, in general in the range from 0.1° to 40° preferably from 0.1 ° to 30° above this transition temperature, preferably in the range from 0.1 ° to 20° above this transition temperature and particularly preferably in the range from 0.1 ° to 10° above this transition temperature.

The cybotactic phase of the inventive media extends preferably over a temperature range which has a width of 10° or more, more preferably of 20° or more, even more preferably of 30° or more and most preferably or 40° or more.

The light modulation elements according to the invention contain at least one element for polarisation of the light. In addition, they preferably contain a further optical element. This further optical element is either a second element for polarisation of the light, a reflector or a transflector or a combination of one or more of these elements.

The optical elements are arranged in such a way that the light, on passing through the mesogenic medium of the light modulation element, passes at least once through at least one polarising element both before entering the mesogenic medium and after exiting from the mesogenic medium.

In a preferred embodiment of the light modulation element in accordance with the present invention, the mesogenic medium is located between two polarisers, i.e. a polariser and an analyser. Two linear polarisers are preferably used. In this embodiment, the absorption axes of the polarisers are preferably crossed and preferably form an angle of 90°.

The light modulation element according to the invention optionally contains one or more birefringent layers. It preferably contains one $\lambda/4$ layers or a plurality of $\lambda/4$ layers, preferably one $\lambda/4$ layer. The optical retardation of the $\lambda/4$ layer is preferably about 140 nm.

The layer thickness (d) of the mesogenic modulation medium is preferably from 0.5 $\mu$m to 20 $\mu$m, particularly preferably from 0.6 $\mu$m to 10 $\mu$m, particularly preferably from 0.8 $\mu$m to 5 $\mu$m and very particularly preferably from 1 $\mu$m to 3 $\mu$m.

The light modulation element according to the present invention may additionally contain one or more further optical elements, such as birefringent layers (for example compensation layers), diffuser layers and elements for increasing the brightness and/or the light yield, or viewing-angle dependence, where this list is not exhaustive.

The contrast of the light modulation elements according to the present invention is well comparable with that of respective light modulation elements operating in the same cell structure, respectively electro-optical mode. If it is found to be slightly inferior in cases, it can be easily improved by applying respectively higher operation voltages. Their outstanding properties, however, are their improved response times.

The light modulation elements according to the present invention may be, and preferably are, constructed like conventional light modulation elements operating in the VA mode, i.e. like typical VA cells. Preferably they have an optical retardation in the range of 0.20 $\mu$m to 0.50 $\mu$m, preferably in the range from 0.25 $\mu$m to 0.40 $\mu$m and most preferably from 0.30 $\mu$m to 0.35 $\mu$m, positive contrast and the absorption axis of the polarisers perpendicular to the preferential alignment of the nematic, respectively cybotactic nematic liquid crystals at the adjacent substrate.

Preferably the mesogenic modulation media for non-display applications are non chiral. In such switching devices, such as spatial light modulators (SLM), high-speed electro-optic shutters for the communication technology, as described in Chang, M.-S., Panarin, Yu.P., and Farrell, G. SPIE 2002, the switching time is much shorter than that of those typically used in display application.

The response times of the light modulation elements according to the present invention however are very short.

Switching between different grey shades of the light modulation elements according to the preset invention is also comparatively faster than in conventional light modulation elements using the same electro-optical mode.

Electro-optical displays according to the present invention contain one or more light modulation elements according to the present invention. In a preferred embodiment, these are addressed by means of an active matrix.

In another preferred embodiment, the light modulation elements according to the present invention are addressed in so-called "field sequential mode". Here, the switching elements may be illuminated successively with light of

different colours synchronously to the addressing. In order to produce the pulsed coloured light, a colour wheel, stroboscope lamps or flash lamps, for example, can be employed.

Electro-optical displays according to the present invention may, in particular if they are used for television screens, computer monitors or the like, contain a colour filter for the display of coloured images. This colour filter advantageously consists of a mosaic of filter elements of different colours. Typically, an element of the colour filter mosaic of a colour is assigned to each electro-optical light modulation element.

In a preferred embodiment of the present invention mesogenic media in accordance with the present invention have a nematic phase besides the cybotactic nematic phase. However, it is also possible to use media in which the temperature range of the nematic phase is so narrow that in practical terms a transition from the cybotactic nematic phase into the isotropic phase takes place.

In a preferred embodiment of the present invention mesogenic media in accordance with the present invention have a cybotactic nematic phase which extends over a range having a width of 10° or more, preferably of 30° or more and most preferably of 50° or more. Preferably this range of the cybotactic nematic phase is extending around and preferably centred around the operation temperature of the light modulation element, preferably around ambient temperature and most preferably at a temperature of about 20°C.

In the case that the operating temperature of the light modulation elements is different from the ambient temperature, the temperature range of the cybotactic phase encompasses and preferably is centred around the operating temperature. In several cases the operation temperature of the light modulation elements is higher than the ambient temperature. This is e.g. generally the case in of displays having back-lighting. In particular in the case of projection displays, the temperature during operation may rise up to 60°C or even more. Here, the clearing point of the media according to the present invention, respectively the transition temperature $T(N_C,N)$ or $T(N_C,I)$, is preferably in the range from 10°C to 70°C and particularly preferably in the range from 20°C to 50°C.

The cybotactic nematic phase of the mesogenic modulation media according to the present invention is preferably stable over a temperature range of 1° or more, preferably of 3° or more, more preferably of 5° or more, most preferably of 10° or more and in particular preferably of 20° or more. The mesogenic modulation media according to the present invention preferably do not crystallize down to temperatures of 10°C or lower, particularly preferably down to temperatures of 0° or lower, and very particularly preferably down to temperatures of -20°C or lower.

In many cases, mesogenic mixtures showing a cybotactic nematic phase allow the determination of macroscopic parameters such as e.g. $\Delta n$, $\Delta\varepsilon$, $\gamma_1$, and $k_i$ directly in this cybotactic nematic phase, as if these mixtures were still in the ordinary nematic phase.

The presence of the cybotactic phase for the mesogenic modulation media can be detected by several means like e.g. by X-ray scattering, <u>d</u>ifferential <u>s</u>canning <u>c</u>alorimetry (DSC), the observation of different divergence behaviour between the viscosity constants, especially of $\gamma_1$, and the elastic constants of the medium and by observation of the response times in electro-optical cells, e.g. in VA or IPS cells.

In DSC the presence of the cybotactic nematic phase typically is obvious from the presence of a transition with an unusually broad peak with low heat flow.

Preferably the presence of the cybotactic nematic phase for the mesogenic modulation media is detected by observation of the response times in VA cells and/or by the observation of different divergence behaviour between the viscosity constants and the elastic constants of the medium. According to the present invention preferably both the last two independent methods are used to detect the presence of the cybotactic nematic phase used.

The cybotactic nematic phase is characterised by larger elastic constants compared to the nematic phase. With decreasing temperature the rotational viscosity ($\gamma_1$) of the media increases following the exponential dependence according to Arrhenius' law. This behaviour even extends to temperatures below the temperature of the transition from the nematic phase into the cybotactic nematic phase. In contrast to this behaviour, the elastic constants of the media increase significantly upon occurrence of the cybotactic nematic phase. This effect is especially pronounced for $k_3$. Typically the elastic constants are 50 % or even up to three times larger than those of the media in the nematic phase, while viscosity still follows the Arrhenius' law.

Preferably the liquid crystalline media in the cybotactic nematic phase have elastic constants, preferably $k_1$ or $k_3$, most preferably $k_3$, which are larger by 20 % or more, preferably by 50 % or more and most preferably by 200 % or more, than those of comparative nematic media which are in the nematic phase at the given temperature.

Preferably the liquid crystalline media, preferably in the cybotactic nematic phase, have large elastic constants at the operating temperature, preferably at 20°C: Preferably $k_1$ is 11 pN or more, more preferably 13 pN or more, more preferably 15 pN or more, still more preferably 20 pN or more and most preferably 25 pN or more and/or $k_3$, preferably is 14 pN or more, more preferably 16 pN or more, still more preferably 20 pN or more, even more preferably 30 pN or more and most preferably 40 pN or more.

The liquid crystalline media preferably have, preferably in the cybotactic nematic phase, a small ratio of the rotational viscosity and the elastic constants, preferably the elastic constant $k_3$. Preferably the ratio $\gamma_1/k_3$ is 8.5 mPa·s/pN or less, more preferably 8.0 mPa·s/pN or less, even more preferably 7.5 mPa·s/pN or less and most preferably 7.0

mPa·s/pN or less. The mesogenic media in accordance with the present invention preferably have a birefringence (Δn) at 20°C in the range of 0.06 or more to 0.35 or less, particularly preferably of 0.065 or more to 0.30 or less, very particularly preferably of 0.07 or more to 0.25 or less. In practical terms, however, it is generally 0.530 or less and usually 0.450 or less.

The mesogenic modulation media according to the present invention have negative dielectric anisotropy, this preferably has a value of -2.5 or less, more preferably of -3.0 or less and most preferably of -3.5 or less.

The mesogenic media in accordance with the present invention preferably consist of several compounds, preferably of from two to 40 compounds, particularly preferably from three to 30 compounds and very particularly preferably from four to 25 compounds.

The mesogenic media according to the invention of negative dielectric anisotropy in accordance with the present invention comprise

- a dielectrically neutral component A, comprising one or more dielectrically neutral compounds comprising two rings of formula I

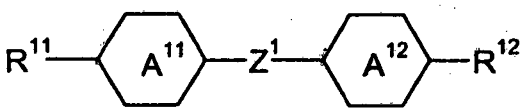

I

wherein

$R^{11}$ and $R^{12}$ are, independently of each other, alkyl or alkoxy with 1 to 15 C atoms or alkoxyalkyl, alkenyl, alkenyloxy with 2 to 15 C atoms, preferably, $R^{11}$ is alkyl, alkoxy or alkenyl, and $R^{12}$ is alkyl or alkoxy, most preferably $R^{11}$ and $R^{12}$ and each, independently of each other, have up to 7 C-atoms,

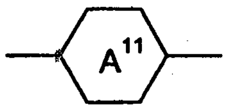

and

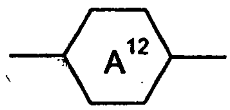

each, independently of one another, are

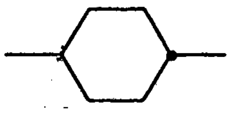

or

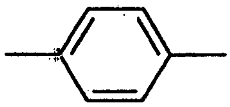

,

$Z^1$ is a single bond or -CH=CH-,

- a dielectrically negative component, component B, comprising of one or more compounds with negative dielectric anisotropy, preferably of formula II

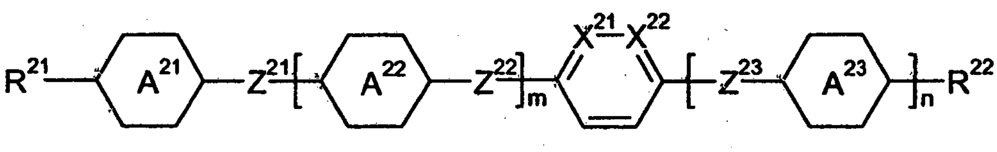

II

wherein

$R^{21}$ and $R^{22}$ are, independently of each other, alkyl or alkoxy with 1 to 15 C atoms or alkoxyalkyl, alkenyl, alkenyloxy with 1 to 15 C atoms, preferably

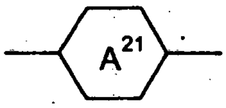

to

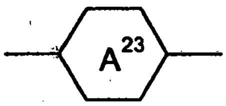

each, independently of one another, are

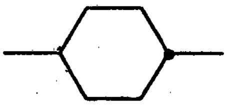
,
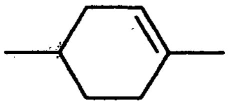
,
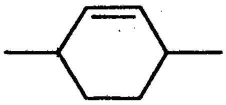
,
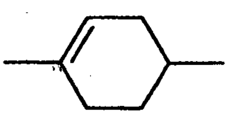
,
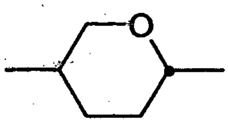
,
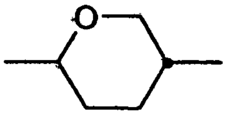
,
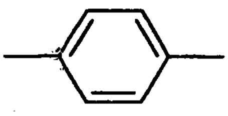
,
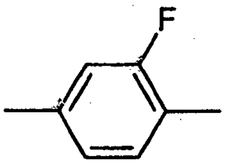
,
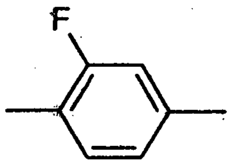
,
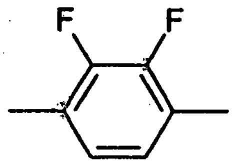
,
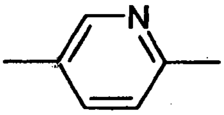
or
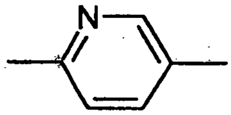
,

preferably

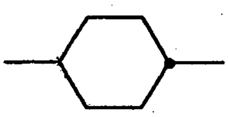
,
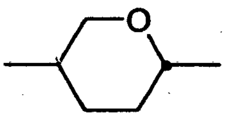
,
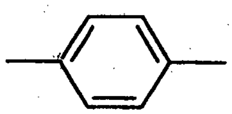
,
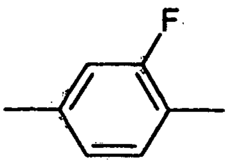
or
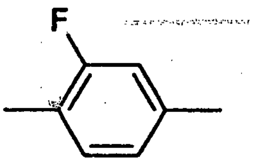
,

and more preferably at least one is, most preferably at least two are

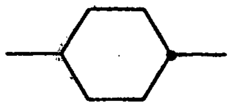, 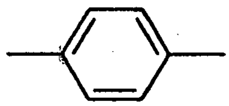 or 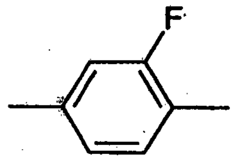,

$X^{21}$ and $X^{22}$ are, independently of each other, C-F or C-Cl, preferably C-F, alternatively one of $X^{21}$ and $X^{22}$ may also be N, more preferably at least one of them is C-F and most preferably they both are C-F,

$Z^{21}$ and $Z^{22}$ are each, independently of one another, a single bond, $-CH_2-CH_2-$, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$, $-CH_2-O-$, $-O-CH_2-$ or -C≡C-, preferably a single bond, $-CH_2-CH_2-$ or $-CF_2-O-$, more preferably $Z^{21}$ is a single bond and $Z^{22}$ is a single bond or $-CF_2-O-$, and

m and n are 0, 1 or 2, preferably 0 or 1,

while m + n is 0, 1, 2 or 3, preferably 0, 1 or 2, most preferably 0 or 1,

- optionally a second dielectrically neutral component, component C comprising one or more compounds of formula III

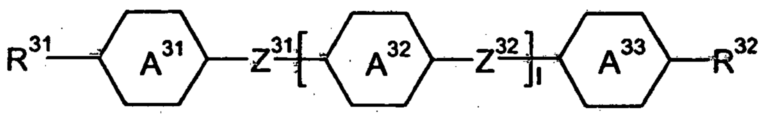 III

from which compounds of formula I are excluded and wherein

$R^{31}$ and $R^{32}$ are each, independently of one another, n-alkyl or n-alkoxy, each having from 1 to 7 carbon atoms, or alkenyl, alkenyloxy, alkynyl or alkoxyalkyl, each having from 2 to 7 carbon atoms, preferably n-alkyl or alkenyl, preferably n-alkyl, vinyl or 1 -E-alkenyl, preferably $R^{31}$ is n-alkyl and $R^{32}$ is vinyl or 1-E-alkenyl,

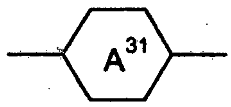

to

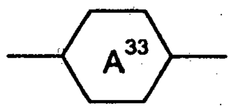

each, independently of one another, are

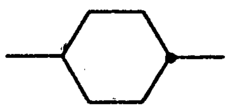, 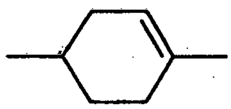, 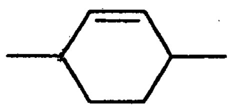,

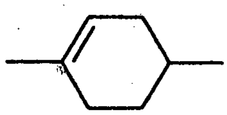, 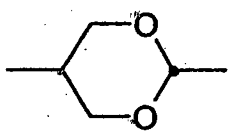, 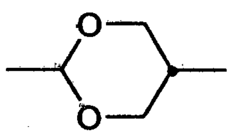,

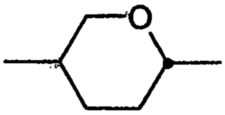 , 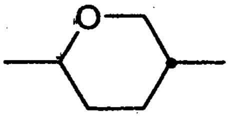 , 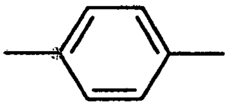 ,

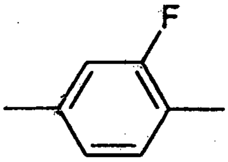 , 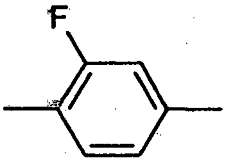 , 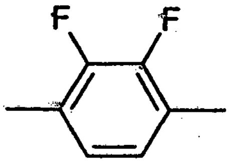 ,

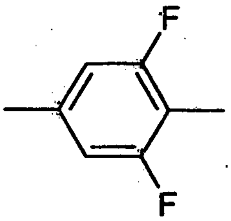 , 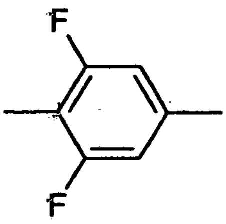 ,

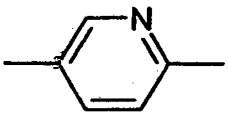 or 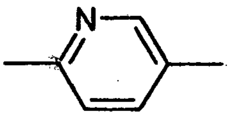 ,

, preferably

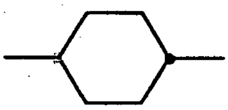 , 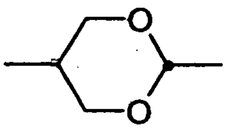 , 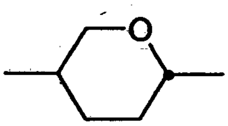 ,

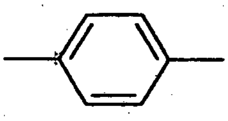 , 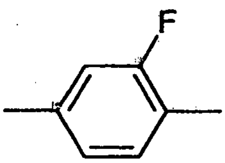 or 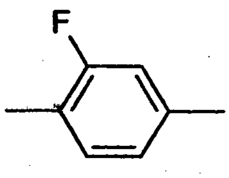 ,

and more preferably at least one is, most preferably at least two are

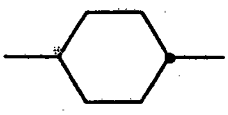 , 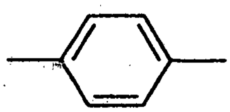 or 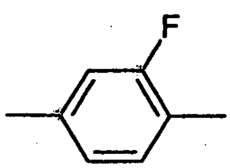 ,

$Z^{31}$ and $Z^{32}$ are each, independently of one another, a single bond, $-CH_2-CH_2-$, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$, $-CH_2-O-$, $-O-CH_2-$ or -C≡C-, preferably a single bond, $-CH_2-CH_2-$ or trans -CH=CH-, preferably a single bond or trans -CH=CH-, preferably a single bond and

l is 0, 1 or 2, preferably 0 or 1, preferably 0, from which compounds of formula I are excluded.

Optionally the media used according to the present invention are comprising a second dielectrically negative component, component D comprising one or more dielectrically negative compounds of formulae which are different from formula II, which may e.g. comprise annellated rings, like naphthaline, tetrahydronaphthaline, decahydronaphthaline and antracene rings, which optionally may be laterally substituted, preferably by one or more F-atoms, and/or other lateral polar groups like e.g. -CN, -NCS, $-CF_3$ or $-OCF_3$ or other moieties inducing a negative dielectric anisotropy, like e.g. thiazoles, thiadiazoles or cyclohexane rings bearing one or more axial F, $-CF_3$ or -CN substituents.

Component A of these media comprises one or more compounds of the formula I and particularly preferably consists predominantly and very particularly preferably consists virtually completely of one or more compounds of the formula I.

Very preferred compounds of formula I are compounds selected from the group of formulae I-1 to I-4

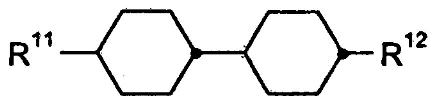
I-1

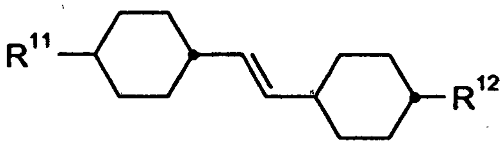
I-2

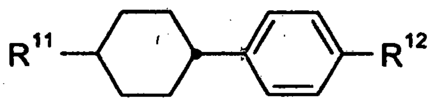
I-3

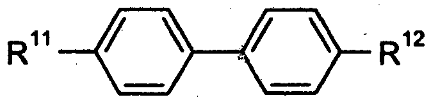
I-4

wherein

$R^{11}$ and $R^{12}$ have the respective meanings given above and preferably have up to 7 C atoms each and most preferably

for formula I-1

$R^{11}$ is alkyl, alkoxy or alkenyl and
$R^{12}$ is alkyl or alkenyl, and particularly the pairs
($R^{11}$; $R^{12}$) are (alkyl; alkyl), (alkoxy; alkyl), (alkenyl, alkyl) or (alkenyl, alkenyl), preferably (alkenyl, alkenyl),

for formula I-2

$R^{11}$ and $R^{12}$ are, independently of each other, alkyl or alkenyl and particularly the pairs
($R^{11}$; $R^{12}$) are (alkyl; alkyl), (alkenyl, alkyl) or (alkenyl, alkenyl), preferably (alkyl; alkyl),

for formula I-3

$R^{11}$ is alkyl or alkenyl and
$R^{12}$ is alkyl or alkoxy, and particularly the pairs
($R^{11}$; $R^{12}$) are (alkyl; alkyl), (alkyl, alkoxy) or (alkenyl, alkyl), and

for formula I-4

$R^{11}$ is alkyl, preferably methyl and
$R^{12}$ is alkenyl, preferably vinyl, 1 E-propenyl, 1E-butenyl, 3E-butenyl or 3E-pentenyl and particularly the pairs
($R^{11}$; $R^{12}$) are (alkyl; alkyl), (alkoxy; alkyl), (alkenyl, alkyl) or (alkenyl, alkenyl), preferably (alkenyl, alkenyl),

Preferably used alkyl groups in the compounds of formula I are n-alkyl with 1 to 7 C atoms, preferably methyl, ethyl or propyl.

Preferably used alkoxy groups in the compounds of formula I are straight chain alkoxy with 1 to 6 C atoms, preferably methoxy, ethoxy or propoxy.

Preferably used alkenyl groups in the compounds of formula I are vinyl, 1 E-propenyl, 1 E-butenyl, 3E-butenyl or 3E-pentenyl.

Component B of these media comprises one or more compounds of the formula II and particularly preferably it consists predominantly and very particularly preferably it consists virtually completely of one or more compounds of the formula II.

Very preferred compounds of formula II are compounds selected from the group of formulae II-1 to II-10

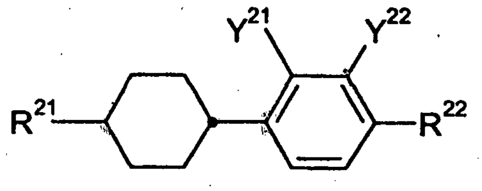

II-1

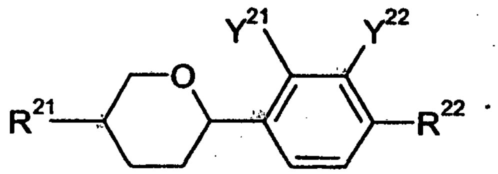

II-2

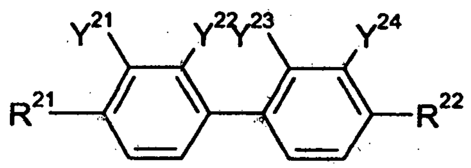

II-3

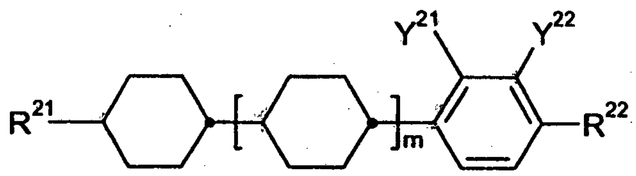

II-4

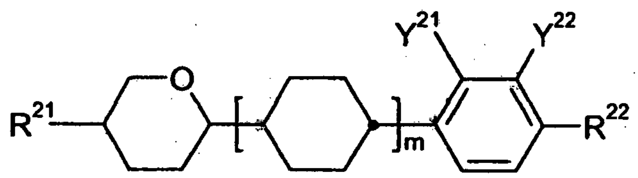

II-5

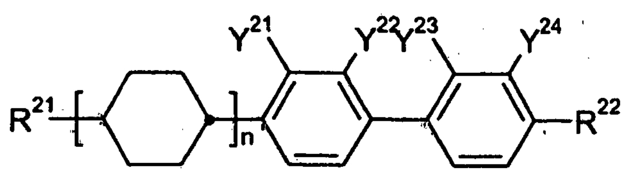

II-6

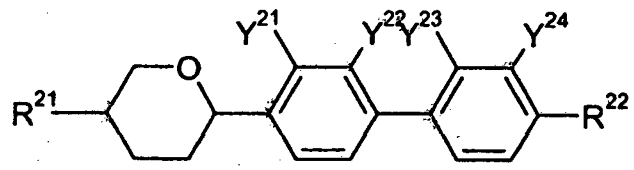

II-7

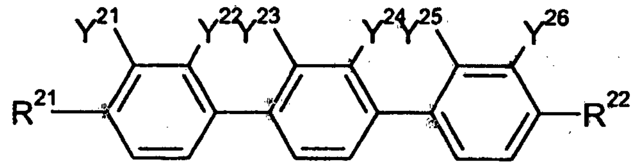

II-8

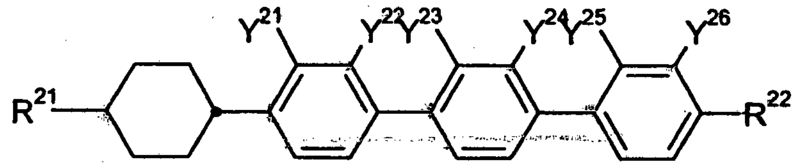

II-9

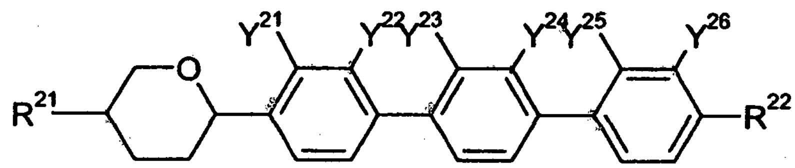

II-10

wherein

m and n are, each, independently of each other, 1 or 2

and the other parameters have the respective meanings given under formula II above and at least two of $Y^{21}$ to $Y^{26}$ present in the respective formulae are F, whereas the others present are, independently of each other, H or F, preferably they are H, and preferably

$R^{21}$ is alkyl or alkenyl with 1, respectively 2, to 7 C-atoms and

$R^{22}$ is alkyl, alkenyl or alkoxy with 1, respectively 2, to 7 C-atoms, preferably alkyl or alkoxy.

Very preferred compounds of formula II are compounds selected from the group of sub-formulae II-1a to II-10f

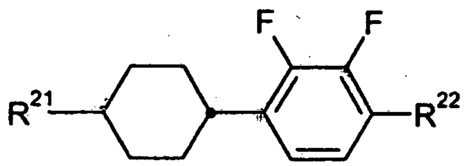

II-1a

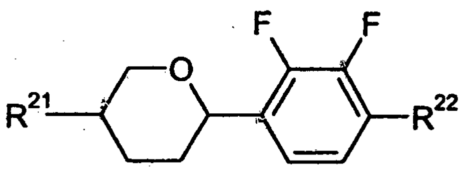

II-2a

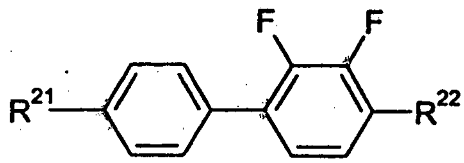

II-3a

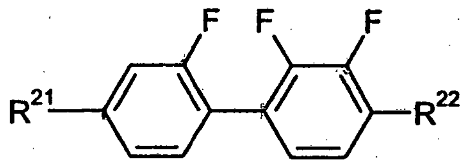

II-3b

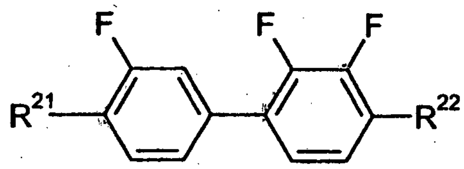

II-3c

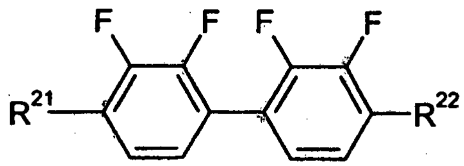

II-3d

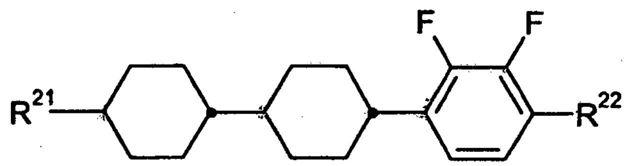

II-4a

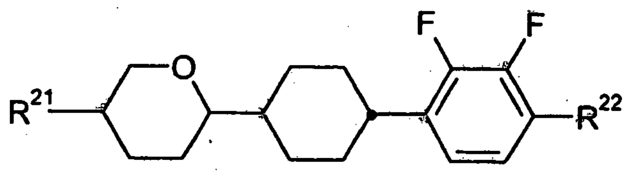

II-5a

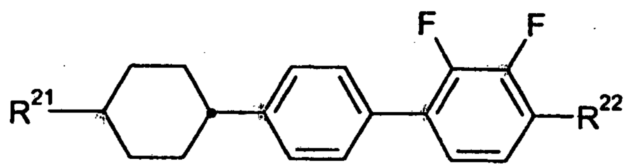

II-6a

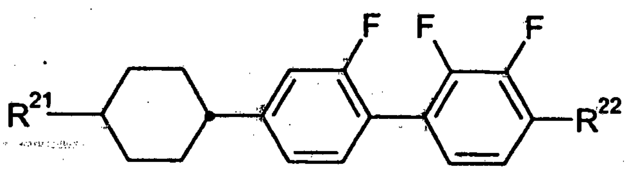

II-6b

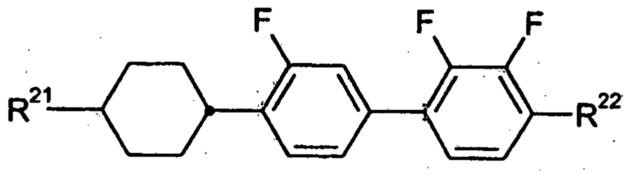

II-6c

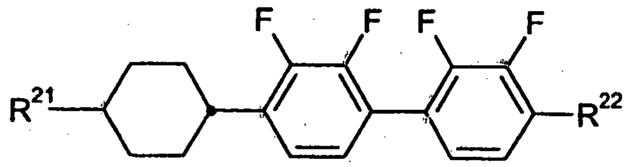

II-6d

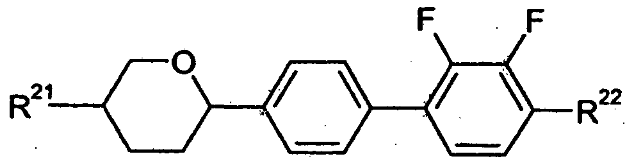

II-7a

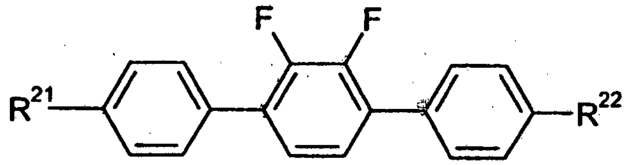

II-8a

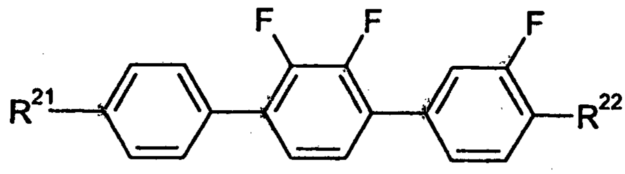

II-8b

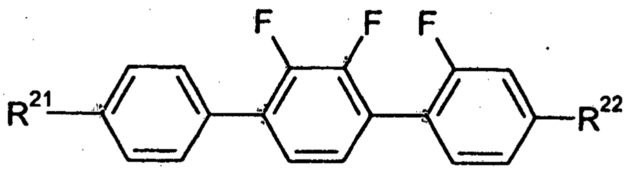

II-8c

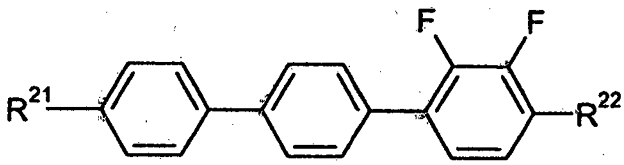

II-8d

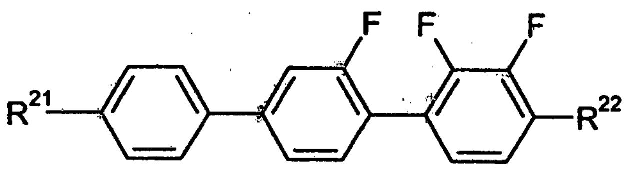

II-8e

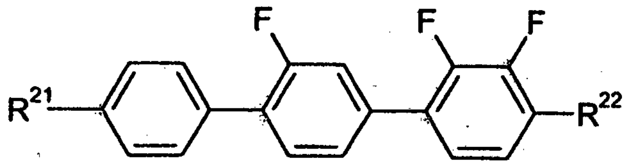

II-8f

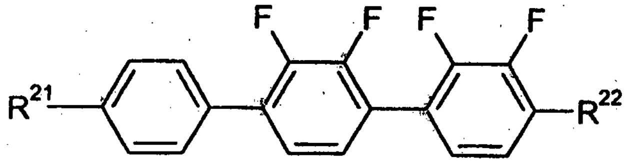

II-8g

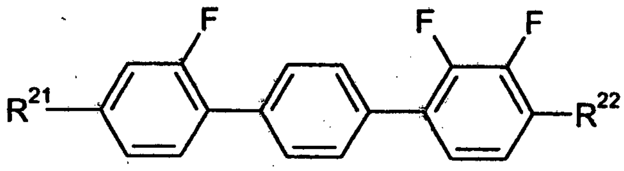

II-8h

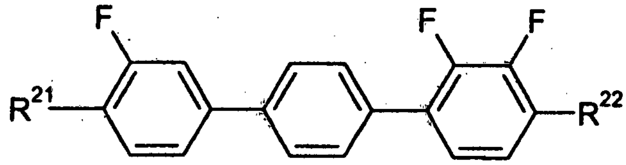

II-8i

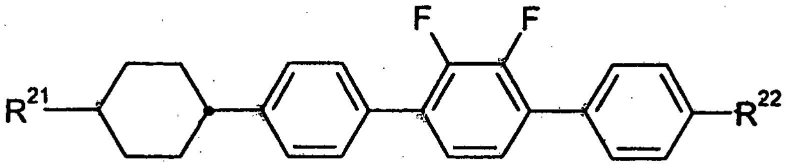

II-9a

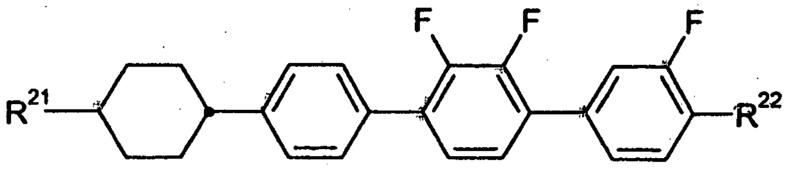

II-9b

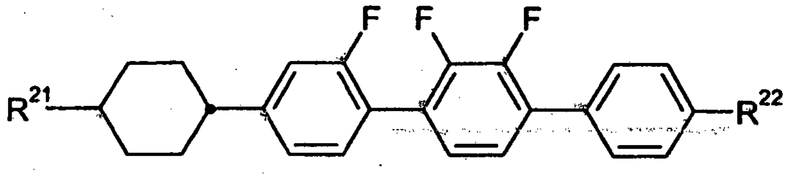

II-9c

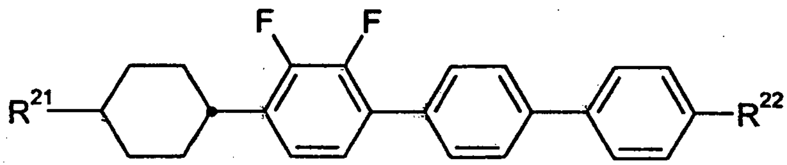

II-9d

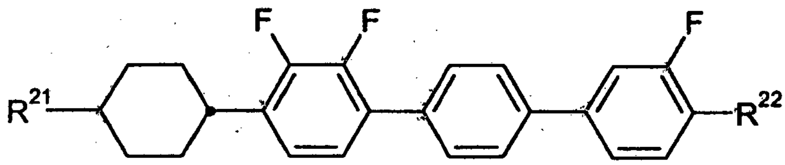

II-9e

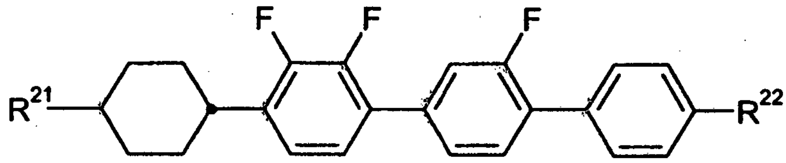

II-9f

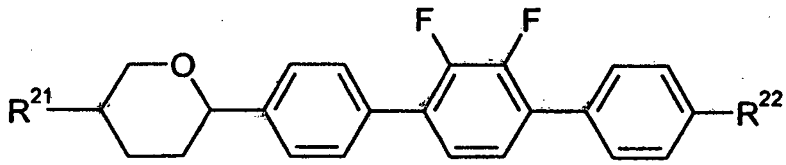

II-10a

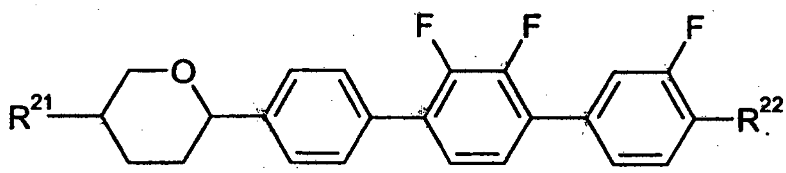

II-10b

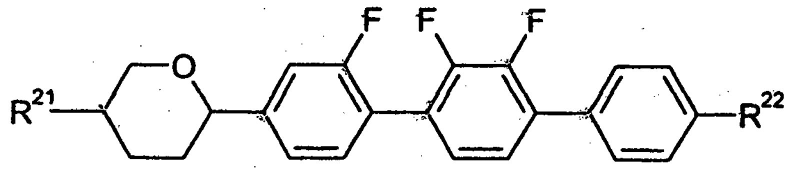

II-10c

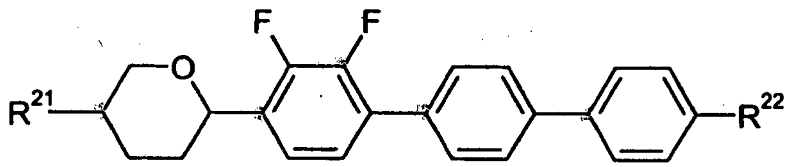

II-10d

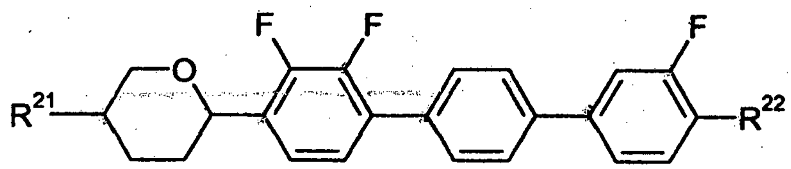

II-10e

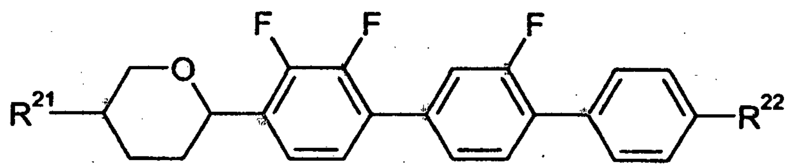

II-10f

wherein the parameters have the respective meanings given under formula II and its respective sub-formulae above

and preferably

$R^{21}$ is alkyl and

$R^{22}$ is alkyl or alkoxy.

Component C of these media preferably comprises one or more compounds of the formula III and particularly preferably consists predominantly and very particularly preferably consists virtually completely of one or more compounds of the formula III.

Very preferred compounds of formula III are compounds selected from the group of formulae III-1-1 to III-3-4

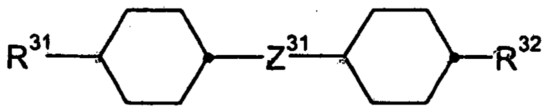

III-1-1

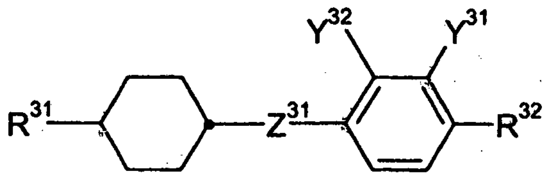

III-1-2

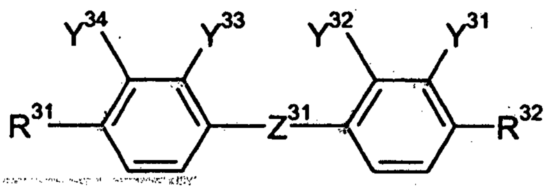

III-1-3

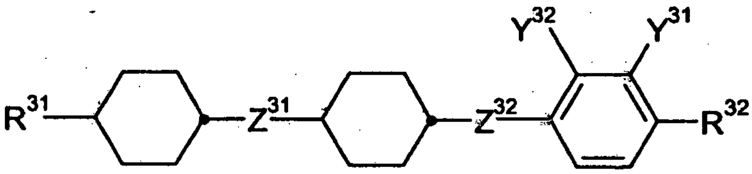

III-2-1

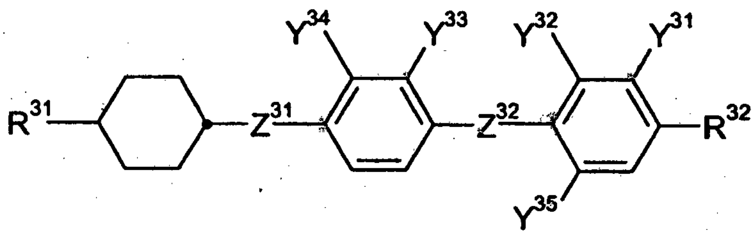

III-2-2

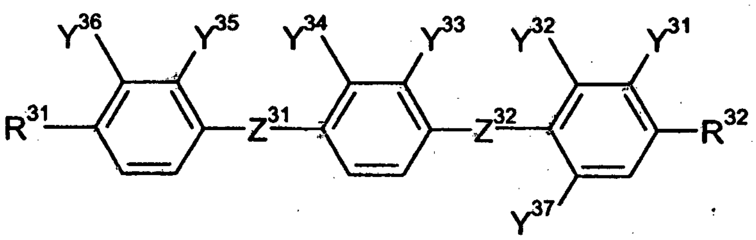

III-2-3

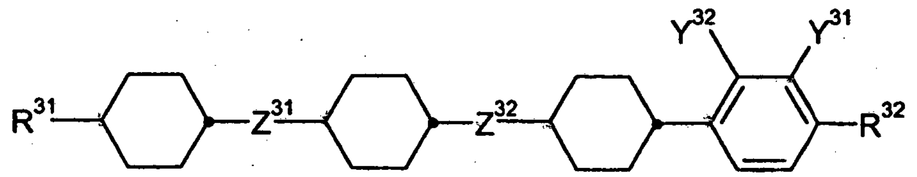

III-3-1

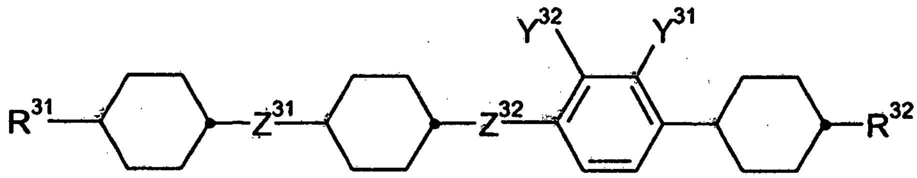

III-3-2

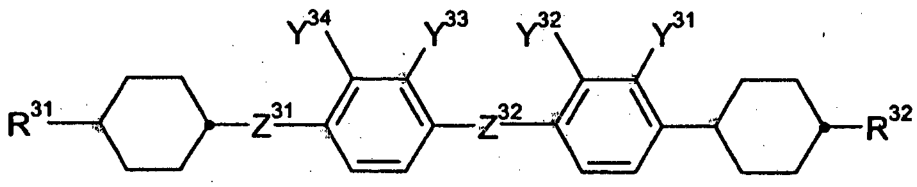

III-3-3

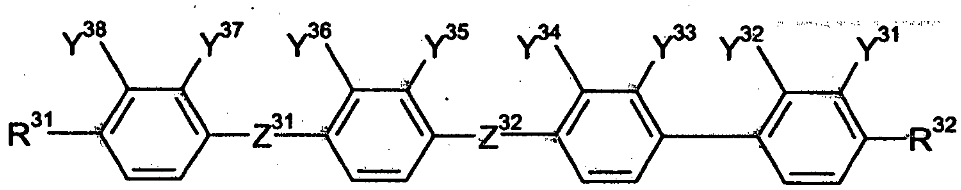

III-3-4

from which compounds of formula I are excluded and wherein the parameters have the respective meanings given under formula III and its respective sub-formulae above and

one or more of $Y^{31}$ to $Y^{38}$ are F, and the others H, preferably one or less of $Y^{31}$ to $Y^{38}$, which are present, are F,

$R^{31}$ and $R^{32}$ are each, independently of one another, n-alkyl, n-alkoxy, each having from 1 to 7 carbon atoms, or alkenyl, having from 2 to 7 carbon atoms, preferably n-alkyl or alkenyl, more preferably n-alkyl, n-alkoxy, vinyl or 1-E-alkenyl, most preferably $R^{31}$ is n-alkyl or alkenyl and $R^{32}$ is n- alkyl, n-alkoxy, vinyl or 1-E-alkenyl and

at most half of the substituents $Y^{31}$ to $Y^{38}$ present in a formula are F, more preferably none, one two or three and most preferably none, one or two, of these substituents are F.

Very preferred compounds of formula III are compounds selected from the group of formulae III-1-1a to III-3-3c

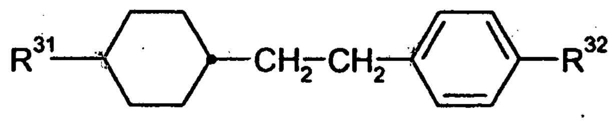

III-1-1a

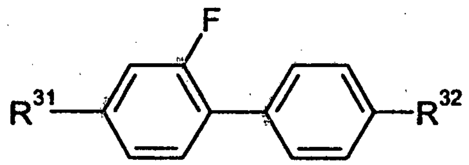

III-1-2a

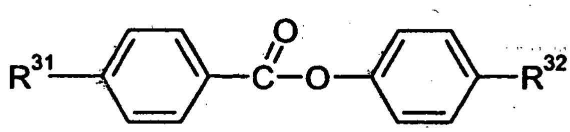

III-1-2b

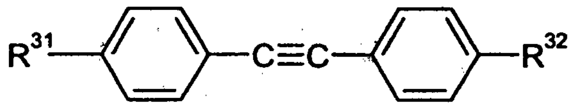

III-1-2c

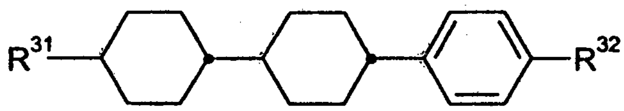

III-2-1a

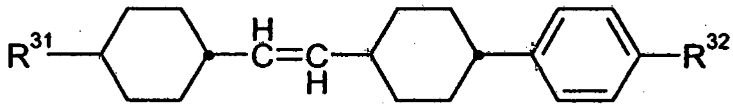

III-2-1b

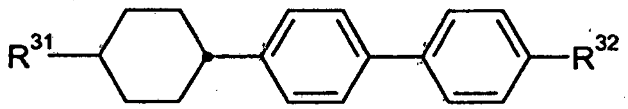

III-2-2a

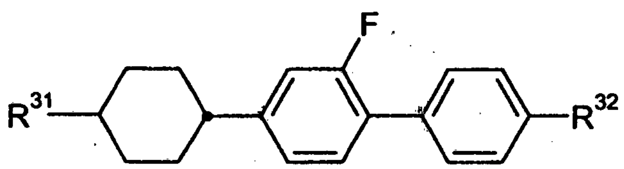

III-2-2b

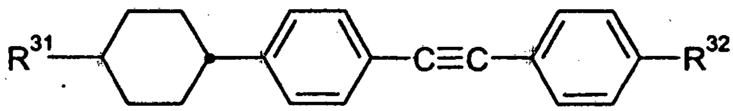

III-2-2c

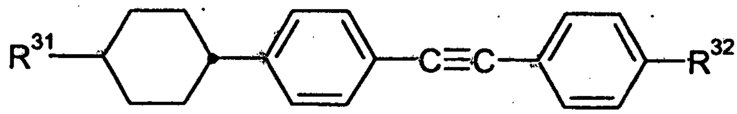

III-2-2d

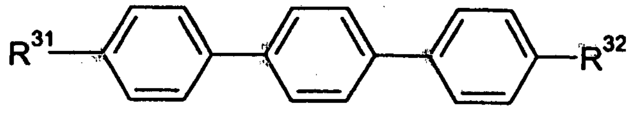

III-2-3a

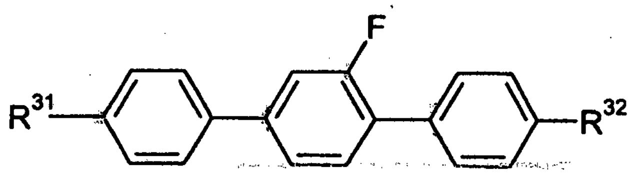

III-2-3b

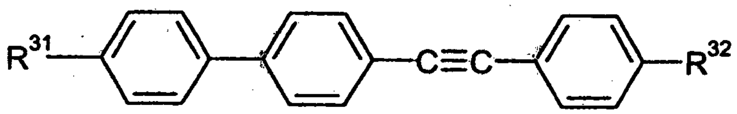

III-2-3c

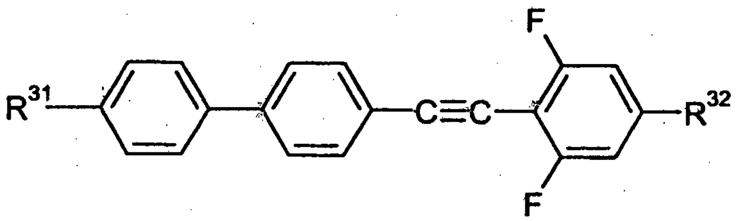

III-2-3d

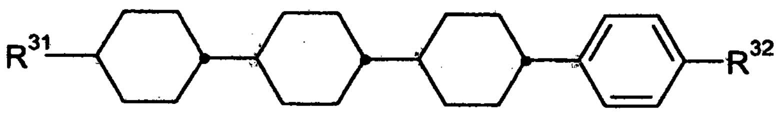

III-3-1a

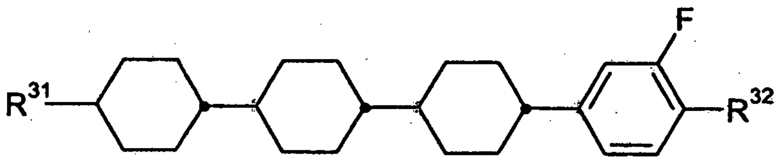

III-3-1b

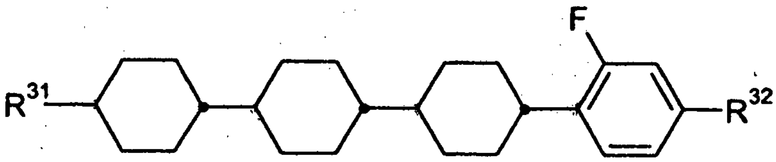

III-3-1c

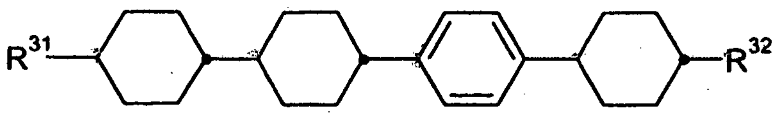

III-3-2a

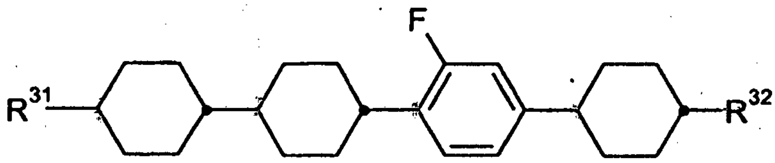

III-3-2b

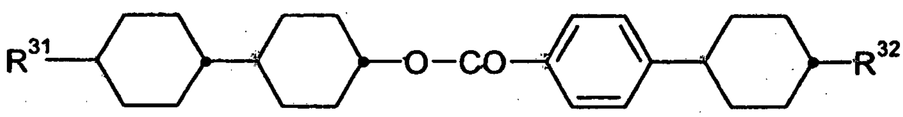

III-3-2c

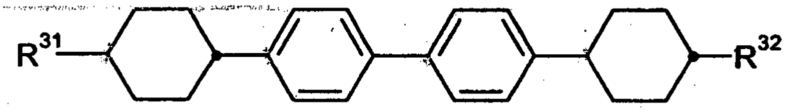

III-3-3a

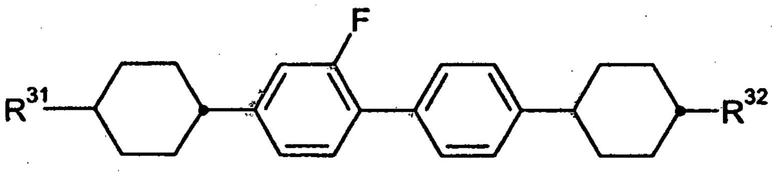

III-3-3b

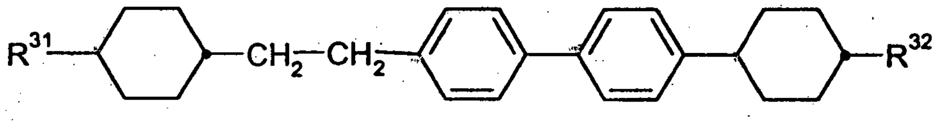

III-3-3c

wherein the parameters have the respective meanings given under formula III and its respective sub-formulae above and in particular preferably in formula III-1-1a

$R^{31}$ is n-alkyl, or alkenyl and
$R^{32}$ is n-alkyl, alkenyl or n-alkoxy,

in formula III-2-1a

$R^{31}$ is n-alkyl, or alkenyl and
$R^{32}$ is n-alkyl.

Especially preferred compounds of formula I are compounds selected from the group of formulae I-4a and I-4b

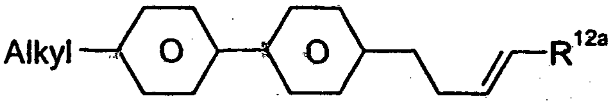

I-4a

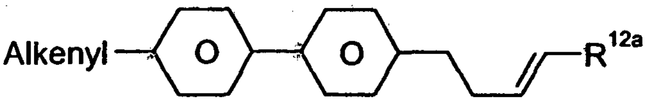

I-4b

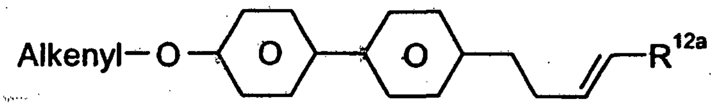

I-4c

wherein

Alkyl is an alkyl group with 1 to 8 C atoms, in particular methyl,

Alkenyl is an alkenyl group with 2 to 7 C atoms, preferably vinyl or 1 E-alkenyl, in particular vinyl or 1E-propenyl, and

$R^{12a}$ is H, methyl, ethyl or n-propyl, in particular methyl.

In a preferred embodiment of the present invention the media according to the invention preferably comprise one or more compounds selected from the group consisting of the compounds of the formulae I-1 to 1-3, which are sub-formulae of the formula I,

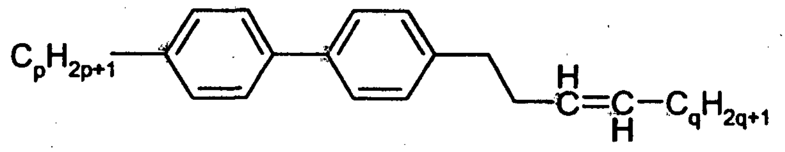

I-4a'

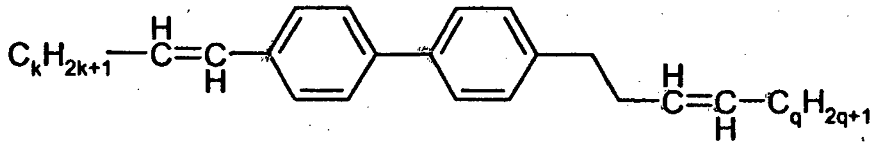

I-4b'

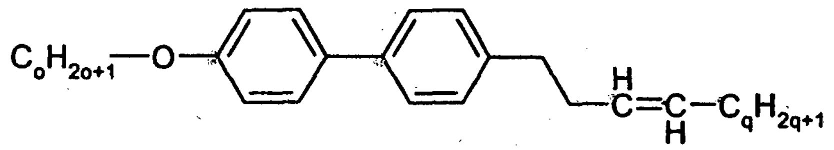

I-4c'

wherein

- p is an integer from 0 to 10, preferably from 1 to 7, preferably 1 or 2,
- q is an integer from 0 to 10, preferably from 0 to 3, preferably 0 or 1,
- k is an integer from 0 to 8, preferably from 0 to 4, preferably 0 or 1 and
- o is an integer from 1 to 10, preferably from 1 to 5, preferably 1, 2 or 3.

The mesogenic media of negative dielectric anisotropy according to the present invention particularly preferably consist predominantly of components A to C.

The mesogenic medium according to the present invention may comprise further additives and chiral dopants in the usual concentrations. The total concentration of these further constituents is in the range from 0% to 10%, preferably in the range from 0.1% to 6%, based on the entire mixture. The concentrations of the individual compounds of these are in the range from 0.1 % to 3%. The concentrations of these compounds and similar constituents of the mixture are not taken into account when specifying the concentration ranges of the other mixture constituents.

The modulation media are obtained in the usual manner from the compounds. The compounds employed in smaller amounts are advantageously dissolved in the compounds employed in larger amounts. If the temperature during the mixing operation is increased above the clearing point of the predominant component, the completeness of the dissolution can easily be observed. However, the media according to the invention can also be prepared in other ways, for example by using pre-mixtures. Pre-mixtures, which can be employed, are, amongst others, mixtures of homologous compounds and/or eutectic mixtures. However, the pre-mixtures may also already be usable modulation media themselves. This is the case in so-called two-bottle or multi-bottle systems.

In the present application, the following applies, unless explicitly stated otherwise.

Dielectrically positive compounds have a $\Delta\varepsilon$ of > 1.5, dielectrically neutral compounds have a $\Delta\varepsilon$ in the range from $-1.5 \leq \Delta\varepsilon \leq 1.5$ and dielectrically negative compounds have a $\Delta\varepsilon$ of < -1.5. The same definitions also apply to components of mixtures and to mixtures. The same definition also applies to components and media.

The dielectric anisotropy $\Delta\varepsilon$ of the compounds, as well as of those components, which can not be investigated as such, is determined at 1 kHz and 20°C by extrapolation of the values of a 10% solution of the respective compound in a host mixture to a proportion of the respective compound of 100%. The capacitances of the test mixtures are determined both in a cell having homeotropic edge alignment and in a cell having homogeneous edge alignment. The layer thickness of the two cell types is about 20 $\mu$m. The measurement is carried out using a rectangular wave having a frequency of 1 kHz and an effective voltage (rms, root mean square) of typically from 0.2 V to 1.0 V. However, in every case, the voltage used is lower than the capacitive threshold of the mixture investigated in each case.

For dielectrically positive compounds, the mixture ZLI-4792 is used and for dielectrically neutral and dielectrically negative compounds, the mixture ZLI-3086, both from Merck KGaA, Germany, is used as host mixture.

The term threshold voltage in the present application means the optical threshold and is indicated for a relative contrast of 10% ($V_{10}$). The mid-grey voltage and the saturation voltage are likewise determined optically and indicated for a relative contrast of 50% and 90% respectively. If the capacitive threshold voltage ($V_0$), also known as the Freedericks threshold, is indicated, this is stated explicitly.

The indicated ranges of values preferably include the limit values.

The concentrations are given in % by weight and are based on the complete mixture. Temperatures are indicated

in degrees Celsius (°C) and temperature differences in differential degrees Celsius (°). All physical properties were determined as described in "Merck Liquid Crystals, Physical Properties of Liquid Crystals", Version of Nov. 1997, Merck KGaA, Germany, and are indicated for a temperature of 20°C. The optical anisotropy ($\Delta n$), also known as the birefringence, is determined at a wavelength of 589.3 nm. The dielectric anisotropy ($\Delta\varepsilon$) is determined at a frequency of 1 kHz.

In a list of possible alternatives, where only the plural is indicated, this also means the singular.

In connection with details on the composition of the media or their components,

- "comprise" means that the concentration of the respective material mentioned, i.e. of the component or of the compound, in the reference unit, i.e. the medium or the component, is preferably 10% or more, particularly preferably 20% or more and very particularly preferably 30% or more,

- "consist predominantly of" means that the concentration of the said material in the reference unit is preferably 50% or more, particularly preferably 60% or more and very particularly preferably 70% or more, and

- "consist virtually completely of" means that the concentration of the said material in the reference unit is preferably 80% or more, particularly preferably 90% or more and very particularly preferably 95% or more.

The dielectric properties, electro-optical properties (for example the threshold voltages) and the response times were determined in test cells produced at Merck KGaA, Darmstadt, Germany. The test cells for the determination of $\Delta\varepsilon$ had a layer thickness of 22 $\mu$m and a circular electrode of indium tin oxide (ITO) having an area of 1.13 $cm^2$ and a protective conducting ring. For homeotropic alignment for the determination of $\varepsilon_{\|}$ cells having a homeotropically aligning polyimide alignment layer were used. Alternatively, lecithin (Merck KGaA) can be used as alignment agent. The cells for the determination of $\varepsilon_{\perp}$ had alignment layers of the polyimide AL-3046 from Japan Synthetic Rubber, Japan. The capacitances were measured using a HP 4274A LCR Meter of Hewlett Packard, USA with a rectangular wave and an effective voltage of generally 0.3 $V_{rms}$. The electro-optical investigations were carried out with white light. The characteristic voltages were determined with perpendicular observation.

The following examples illustrate the present invention without limiting it in any way. They, however, illustrate typical realizable properties.

All temperatures, like e.g. the melting point: T(C,N), the transition temperature from the smectic (S) to the nematic (N) phase: T(S,N), the transition temperature from the smectic (S) to the cybotactic ($N_c$) phase: T(S,$N_c$), the transition temperature from the cybotactic ($N_c$) to the nematic (N) Phase: T($N_c$,N) and the clearing point T(N,I) are given in degrees Celsius, temperature differences are given in degrees centigrade.

For the present invention and especially in the following examples the structures of the mesogenic compounds are given by abbreviations, also called acronyms. In these acronyms the chemical formulae are abbreviated as follows using the following tables A to C. All groups $C_nH_{2n+1}$, $C_mH_{2m+1}$, $C_lH_{2l+1}$, $C_nH_{2n-1}$, $C_mH_{2m-1}$ and $C_lH_{2l-1}$ are straight chain alkyl respectively alkyl, preferably 1E-alkenyl, each with n, m respectively l C-atoms. In table A codes used for the ring elements of the core structures of the compounds are listed, whereas in table B shows the linking groups. Table C lists the meanings of the codes for the left hand side, respectively the right hand side, end groups. Table D compiles exemplary structures of compounds together with their respective abbreviations.

**Table A: Ring Elements**

C 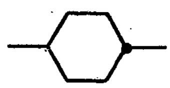

D 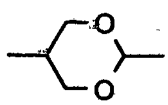

DI 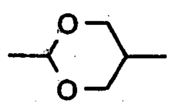

A 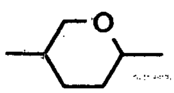

(continued)

AI 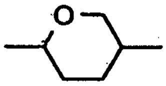

P 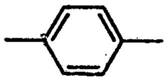

G 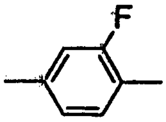

GI 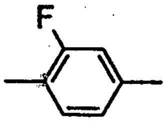

U 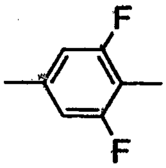

UI 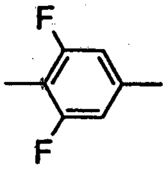

Y 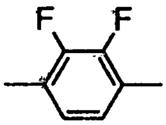

Np 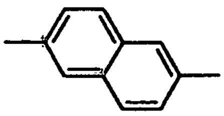

tH 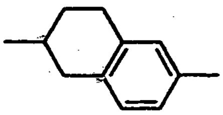

dH 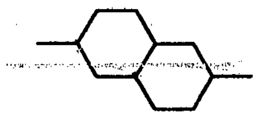

**Table B: Linking Groups**

| | | | |
|---|---|---|---|
| **E** | $-CH_2CH_2-$ | **Z** | -CO-O- |
| **V** | -CH=CH- | **ZI** | -O-CO- |
| **X** | -CF=CH- | **O** | $-CH_2-O-$ |
| **XI** | -CH=CF- | **OI** | $-O-CH_2-$ |
| **B** | -CF=CF- | **Q** | $-CF_2-O-$ |
| **T** | -C≡C- | **QI** | $-O-CF_2-$ |
| **W** | $-CF_2CF_2-$ | **T** | -C≡C- |

**Table C: End Groups**

| Left hand side, | | Right hand side, | |
|---|---|---|---|
| | **used singly** | | |
| **-n-** | $C_nH_{2n+1}$- | **-n** | -$C_nH_{2n+1}$ |
| **-nO-** | $C_nH_{2n+1}O$- | **-nO** | -O $C_nH_{2n+1}$ |
| **-V-** | $CH_2$=CH- | **-V** | -CH=$CH_2$ |
| **-nV-** | $C_nH_{2n+1}$-CH=CH- | **-nV** | -$C_nH_{2n}$-CH=$CH_2$ |
| **-Vn-** | $CH_2$=CH-$C_nH_{2n}$- | **-Vn** | -CH=CH-$C_nH_{2n+1}$ |
| **-nVm-** | $C_nH_{2n+1}$-CH=CH- $C_mH_{2m}$- | **-nVm** | -$C_nH_{2n}$-CH=CH- $C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2$- | **-M** | -$CFH_2$ |
| **-D-** | $CF_2H$- | **-D** | -$CF_2H$ |
| **-T-** | $CF_3$- | **-T** | -$CF_3$ |
| **-MO-** | $CFH_2O$ - | **-OM** | -$OCFH_2$ |
| **-DO-** | $CF_2HO$ - | **-OD** | -$OCF_2H$ |
| **-TO-** | $CF_3O$- | **-OT** | -$OCF_3$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | NC-C≡C- | **-AN** | -C≡C-CN |
| | **used in combination** | | |
| **-...A...-** | -C≡C- | **-...A...** | -C≡C- |
| **-...V...-** | CH=CH- | **-...V...** | -CH=CH- |
| **-...Z...-** | -CO-O- | **-...Z...** | -CO-O- |
| **-...Zl...-** | -O-CO- | **-...Zl...** | -O-CO- |
| **-...K...-** | -CO- | **-...K...** | -CO- |
| **-...W...-** | -CF=CF- | **-...W...** | -CF=CF- |

wherin n and m each are integers and the three dots "..." are spacers for other abbreviations of from this table.

## Table D: Exemplary Structures

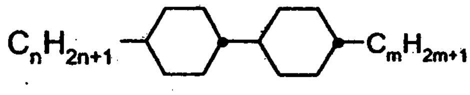

**CC-n-m**

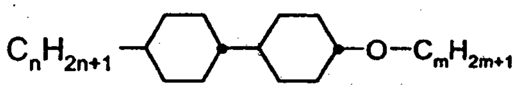

**CC-n-Om**

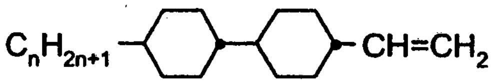

**CC-n-V**

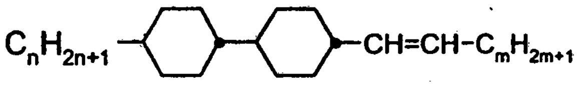

**CC-n-Vm**

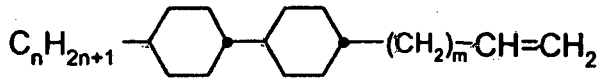

**CC-n-mV**

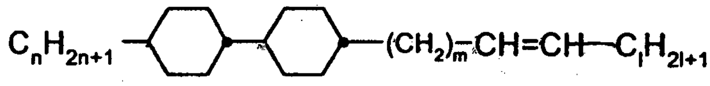

**CC-n-mVI**

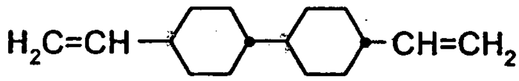

**CC-V-V**

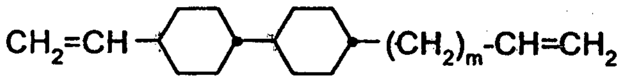

**CC-V-mV**

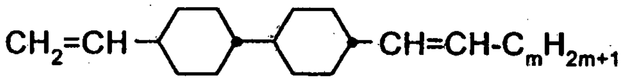

**CC-V-Vm**

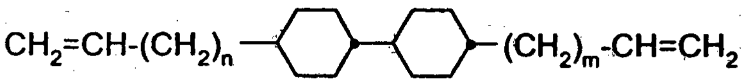

**CC-Vn-mV**

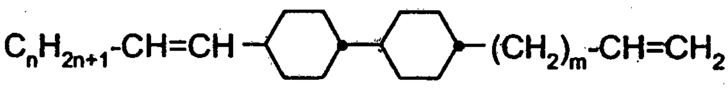

**CC-nV-mV**

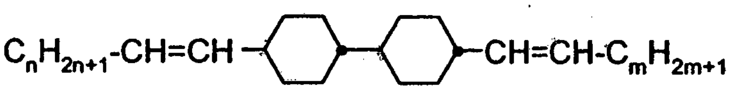

**CC-nV-Vm**

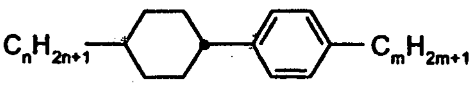

**CP-n-m**

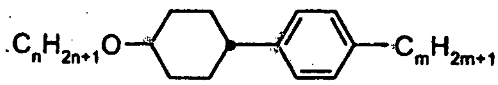

**CP-nO-m**

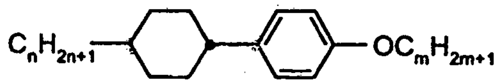

**CP-n-Om**

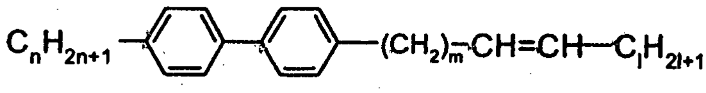

**PP-n-mVI**

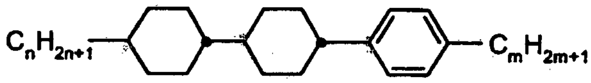

**CCP-n-m**

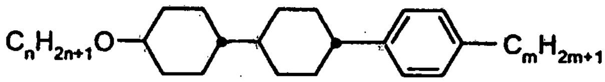

**CCP-nO-m**

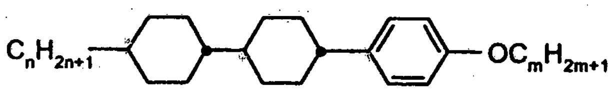

**CCP-n-Om**

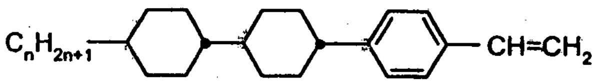

**CCP-n-V**

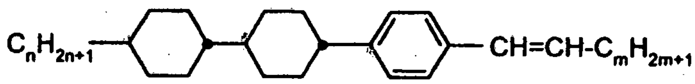

**CCP-n-Vm**

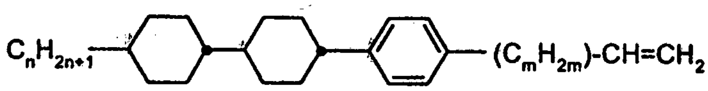

**CCP-n-mV**

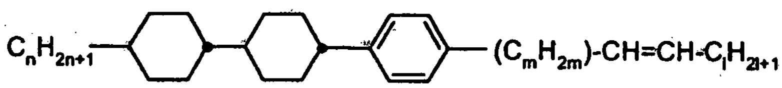

**CCP-n-mVI**

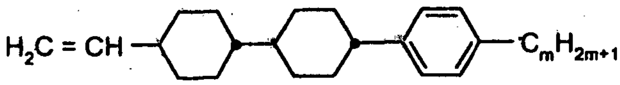

**CCP-V-m**

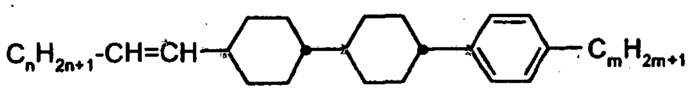

**CCP-nV-m**

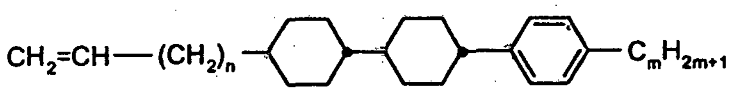

**CCP-Vn-m**

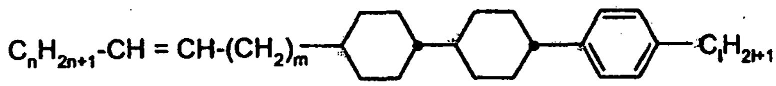

**CCP-nVm-l**

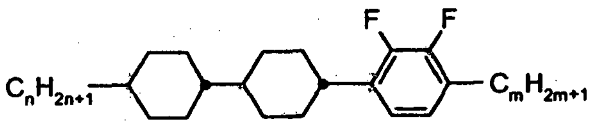

**CCY-n-m**

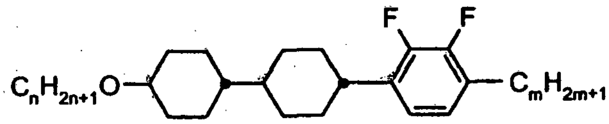

**CCY-nO-m**

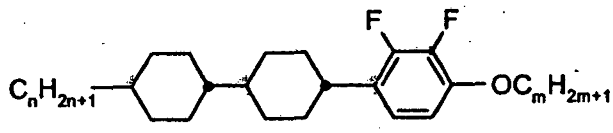

**CCY-n-Om**

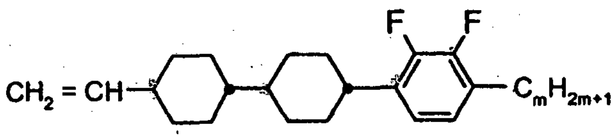

**CCY-V-m**

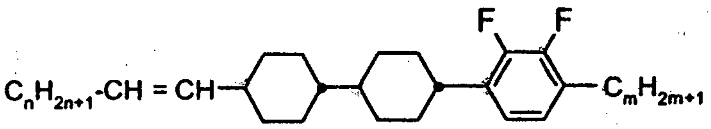

**CCY-nV-m**

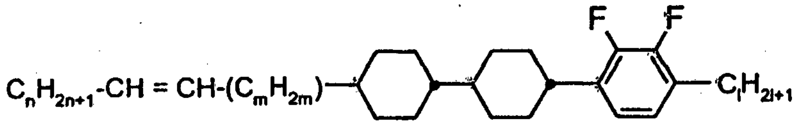

**CCY-nVm-l**

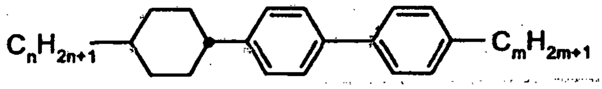

**CPP-n-m**

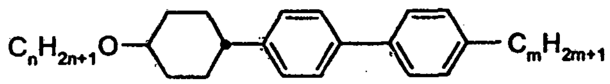

**CPP-nO-m**

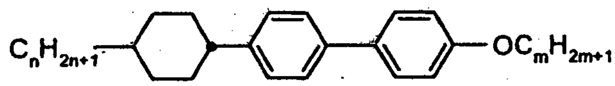

**CPP-n-Om**

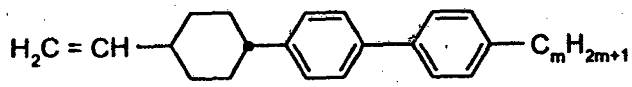

**CPP-V-m**

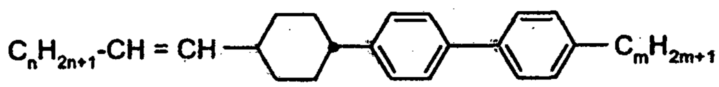

**CPP-nV-m**

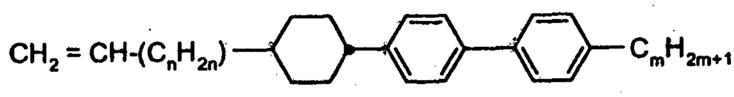

**CPP-Vn-m**

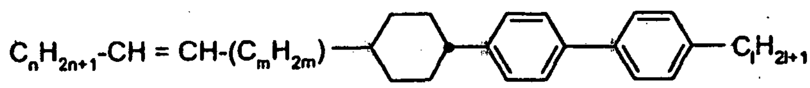

**CPP-nVm-l**

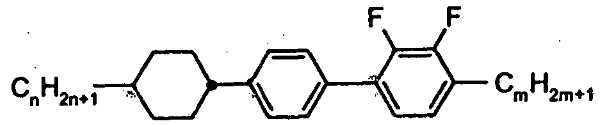

**CPY-n-m**

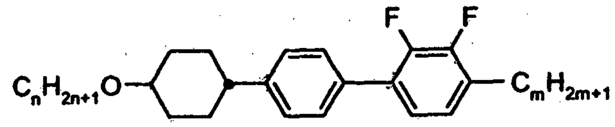

**CPY-nO-m**

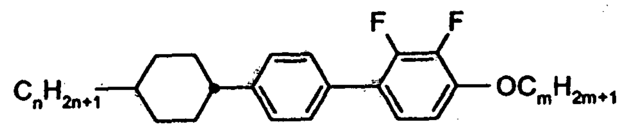

**CPY-n-Om**

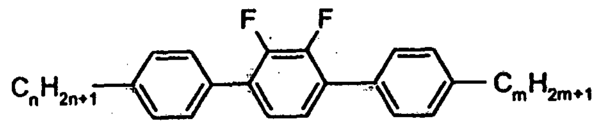

**PYP-n-m**

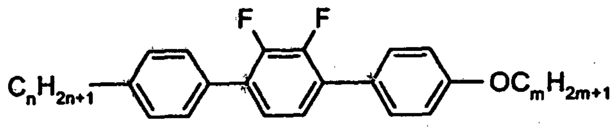

**PYP-nO-m**

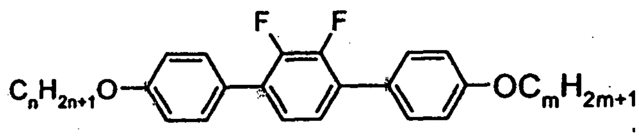

**PYP-nO-Om**

In the following table, Table E, exemplary compounds are compiled, which may be used to as stabiliser in the mesogenic media according to the present invention.

**Table E**

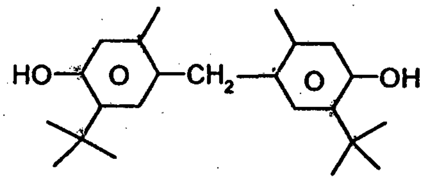

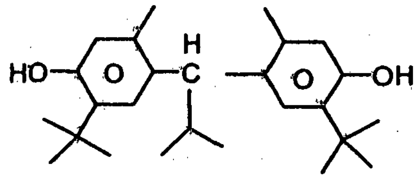

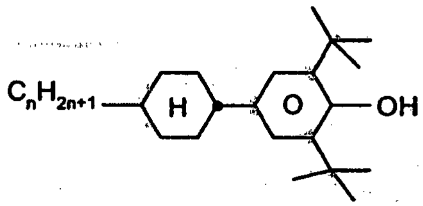

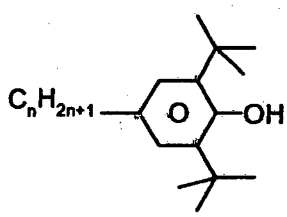

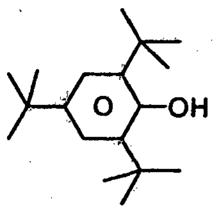

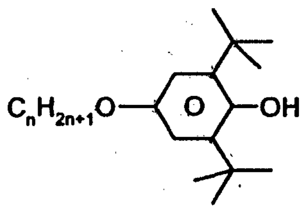

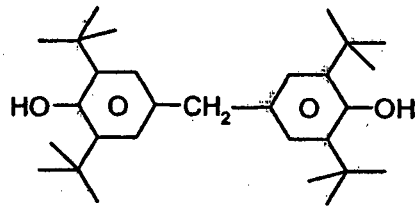

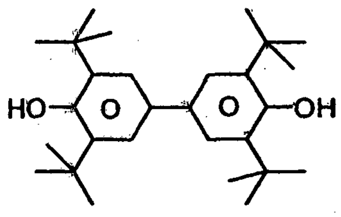

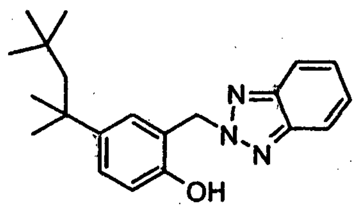

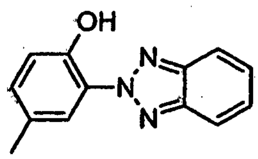

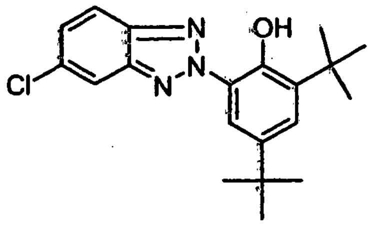

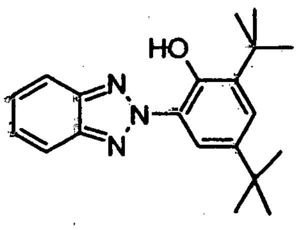

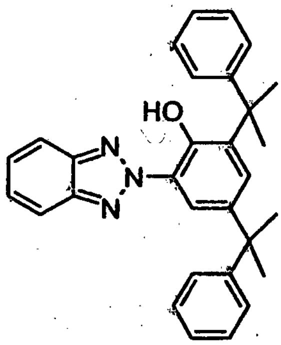

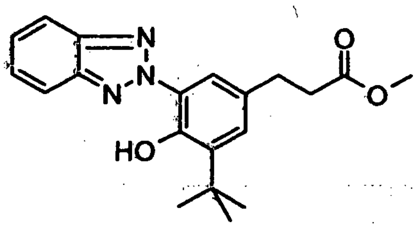

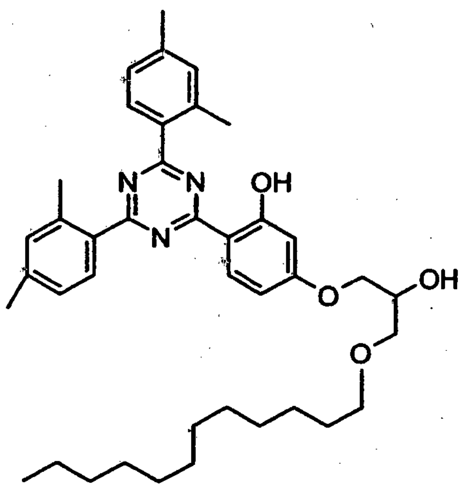

In a preferred embodiment of the present invention the mesogenic media comprise one or more compounds selected from the group of compounds of Table E

In the following table, Table F, exemplary compounds are compiled, which may be preferably used to as chiral dopants in the mesogenic media according to the present invention.

**Table F**

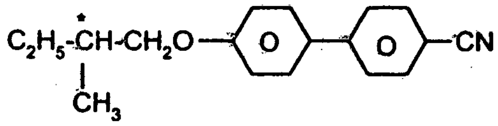

**C 15**

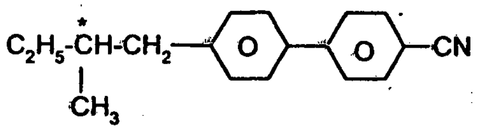

**CB 15**

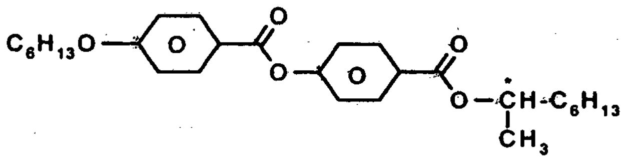

**R/S-811**

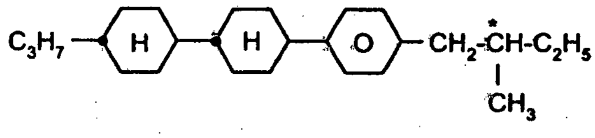

**CM 44**

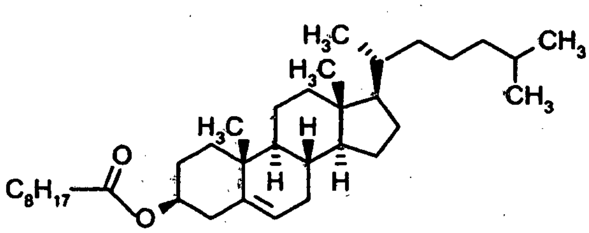

**CN**

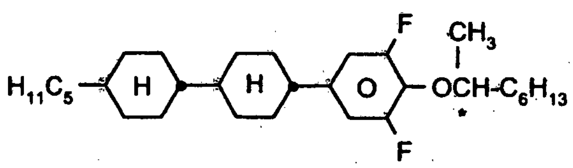

**R/S- 2011**

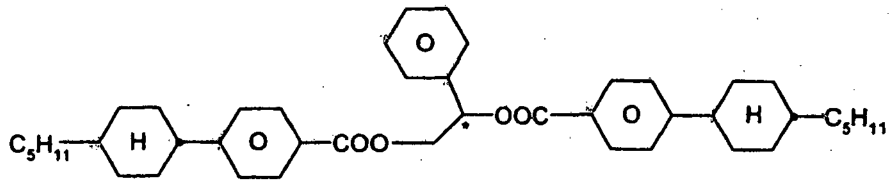

R/S-1011

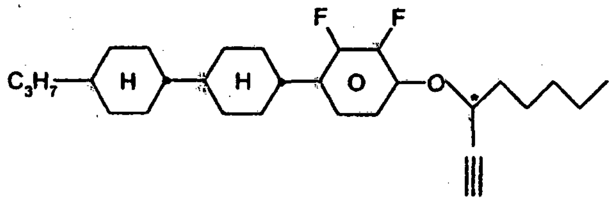

R/S-3011

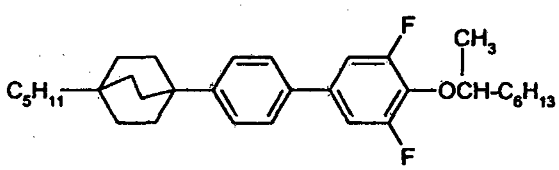

R/S-4011

In a preferred embodiment of the present invention the mesogenic media comprise one or more compounds selected from the group of compounds of Table F.

The mesogenic media in accordance with the present application preferably comprise two or more, preferably four or more, compounds selected from the group consisting of the compounds of the tables above.

Examples

The examples described below illustrate the present invention without restricting it in any way. They furthermore indicate to the person skilled in the art the properties and in particular the property combinations that can be achieved by means of the present invention.

Comparative Example 1

A liquid-crystal mixture of the following composition is prepared and investigated.

| Composition | | | Physical Properties | | | |
|---|---|---|---|---|---|---|
| Compound # | Abbreviation | Conc. /Mass-% | T(N, I) | = | 100.5 | °C |
| | | | T(S, N) | < | n.d. | °C |
| 1 | CY-3-O4 | 13.0 | | | | |
| 2 | CCY-3-O3 | 12.0 | $n_e$ (20°C, 589 nm) | = | 1.5852 | |
| 3 | CCY-4-O2 | 8.0 | $\Delta n$ (20°C, 589 nm) | = | 0.1036 | |
| 4 | CPY-2-O2 | 12.0 | $\varepsilon_{\perp}$ (20°C, 1 kHz) | = | 6.4 | |
| 5 | CPY-3-O2 | 12.0 | $\Delta\varepsilon$ (20°C, 1 kHz) | = | -3.1 | |
| 6 | CC-5-V | 19.0 | $k_1$ (20°C) | = | 18.7 | pN |
| 7 | CC-3-V1 | 12.0 | $k_3$ (20°C) | = | 17.5 | pN |

(continued)

| Composition | | | Physical Properties | | | |
|---|---|---|---|---|---|---|
| 8 | CC-3-5 | 5.0 | $k_3/k_1$ (20°C) | = | 0.94 | |
| 9 | CPP-3-2 | 7.0 | $\gamma_1$ (20°C) | = | 155 | mPa·s |
| Σ | | 100.0 | $V_0$ (20°C) | = | 2.50 | V |
| Remark: n.d.: not determined. | | | | | | |

Example 1

A liquid-crystal mixture of the following composition is prepared and investigated.

| Composition | | | Physical Properties | | | |
|---|---|---|---|---|---|---|
| # | Compound Abbreviation | Conc. /Mass-% | T(N, I) | = | 112.5 | °C |
| | | | $T(N_C, N)$ | = | 35 | °C |
| 1 | CY-5-O2 | 6.0 | $T(S, N_C)$ | < | 20 | °C |
| 2 | CCY-3-O2 | 30.0 | $n_e$ (20°C, 589 nm) | = | 1.5847 | |
| 3 | CCY-5-O2 | 20.0 | Δn (20°C, 589 nm) | = | 0.1018 | |
| 4 | CC-3-5 | 30.0 | $\varepsilon_\perp$ (20°C, 1 kHz) | = | 6.0 | |
| 5 | PP-1-2V1 | 14.0 | Δε (20°C, 1 kHz) | = | -3.0 | |
| Σ | | 100.0 | $k_1$ (20°C) | = | 27.2 | pN |
| | | | $k_3$ (20°C) | = | 26.8 | pN |
| | | | $k_3/k_1$ (20°C) | = | 0.99 | |
| | | | $\gamma_1$ (20°C) | = | 207 | mPa·s |
| | | | $V_0$ (20°C) | | 3.15 | V |

Though this mixture of example 1 has a significantly higher rotational viscosity than the mixture of the comparative example (207 mPa·s compared to 155 mPa·s), it has a significantly shorter response time in good agreement with the reduction of the ratio of ($\gamma_1/k_3$) from 8.9 mPa·s/pN to 7.7 mPa·s/pN.

An electro-optical test cell of the VA type with homeotropic alignment containing a light modulation element containing the liquid-crystal mixture is produced. The substrates consists of glass. Substrates covered with a polyimide alignment layer (SE-1211) for homeotropic alignment are used. The layer thickness of the cell, i.e. of the modulation medium, is selected such, that the optical retardation (d·Δn) is 0.32 μm.

A first polariser is used before the cell and a second polariser (analyser) is used after the cell. The absorption axes of the two polarisers form an angle of 90° with each another. The voltage-transmission characteristic line was determined using a DMS 703 electro-optical measurement station from Autronic-Melchers, Karlsruhe, Germany. The operating temperature typically is about 20°C.

The electro-optical modulation element is characterised by short response times. It is been operated switching a rectangular waveform with a frequency of 60 Hz from 0 V to a voltage of 5 $V_{rms}$.

## Claims

**1.** Electro-optical light modulation element comprising

- an electrode arrangement,
- at least one element for polarisation of light and
- a mesogenic modulation medium,

**characterised in that**

- the mesogenic modulation medium has a negative dielectric anisotropy at a temperature of 20°C and at a frequency of 1 kHz,
- the mesogenic modulation medium exhibits a cybotactic nematic phase,
- the mesogenic modulation medium comprises a dielectrically neutral component A, comprising one or more

dielectrically neutral compounds having a $\Delta\varepsilon$ in the range from $-1.5 \leq \Delta\varepsilon \leq 1.5$ and comprising two rings of formula I

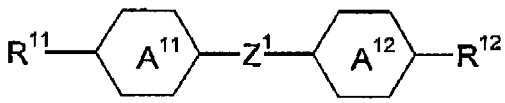

I

wherein

$R^{11}$ and $R^{12}$ are, independently of each other, alkyl or alkoxy with 1 to 15 C atoms or alkoxyalkyl, alkenyl, alkenyloxy with 2 to 15 C atoms,

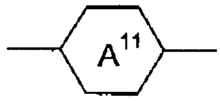

and

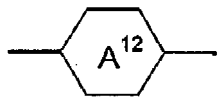

each, independently of one another, are

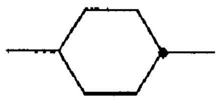

or

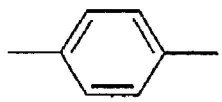

,

$Z^1$ is a single bond or -CH=CH-,

- the mesogenic modulation medium comprises a dielectrically negative component, component B, having a $\Delta\varepsilon$ in the range $\Delta\varepsilon < -1.5$ and comprising one or more compounds with negative dielectric anisotropy of formula II

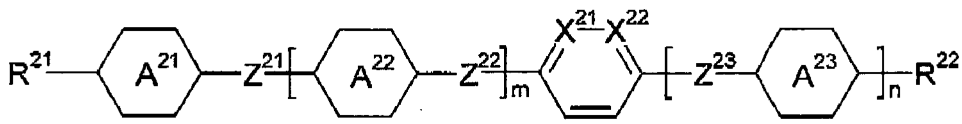

II

wherein

$R^{21}$ and $R^{22}$ are, independently of each other, alkyl or alkoxy with 1 to 15 C atoms or alkoxyalkyl, alkenyl, alkenyloxy with 1 to 15 C atoms,

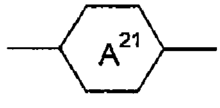

to

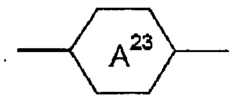

each, independently of one another, are

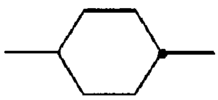 , 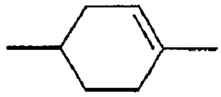 ,

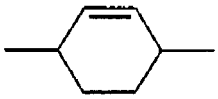 , 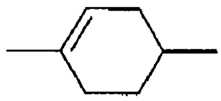 ,

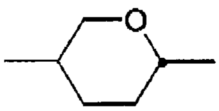 , 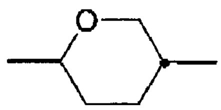 ,

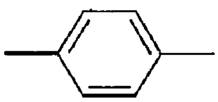 , 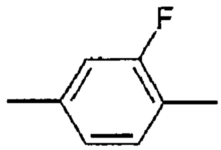 ,

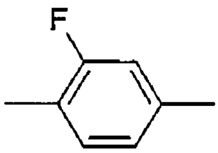 , 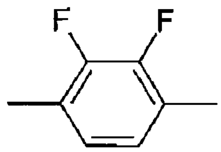 ,

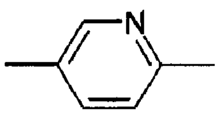 or 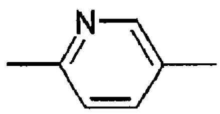 ,

$X^{21}$ and $X^{22}$ are, independently of each other, C-F or C-Cl, preferably C-F, alternatively one of $X^{21}$ and $X^{22}$ may also be N, more preferably at least one of them is C-F and most preferably they both are C-F,
$Z^{21}$ and $Z^{22}$ are each, independently of one another, a single bond, $-CH_2-CH_2-$, -CO-O-, trans -CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$, $-CH_2-O-$, $-O-CH_2-$ or $-C\equiv C-$, and
m and n are 0, 1 or 2,

while m + n is 0, 1, 2 or 3,
- the light modulation element has an optical retardation at a temperature of 20°C and a wavelength of 589 nm in the range from 0.20 μm to 0.50 μm and
- the light modulation element is arranged to be operated at a temperature at which the mesogenic modulation medium is in said cybotactic nematic phase.

**2.** Light modulation element according to Claim 1, **characterised in that**

- the light modulation element has an optical retardation at a temperature,of 20°C and a wavelength of 589 nm in the range from 0.25 μm to 0.40 μm.

**3.** Light modulation element according to Claim 2, **characterised in that**

- the light modulation element has an optical retardation at a temperature of 20°C and a wavelength of 589 nm in the range from 0.30 μm to 0.35 μm.

**4.** Light modulation element according to Claim 3, **characterised in that**

- the light modulation element has an optical retardation at a temperature of 20°C and a wavelength of 589 nm of 0.32 μm.

**5.** Light modulation element according to at least one of Claims 1 to 4, **characterised in that**

- the mesogenic medium is present in the form of a layer.

**6.** Light modulation element according to at least one of Claims 1 to 5, **characterised in that**

- the mesogenic medium is located between two substrates,
- at least one of these two substrates is light-transparent and
- the electrode arrangement is able to generate an electric field having a significant component perpendicular to the surface of the mesogenic modulation medium.

**7.** Light modulation element according to at least one of Claims 1 to 6, **characterised in that**

- the mesogenic modulation medium additionally exhibits a nematic phase besides the cybotactic nematic phase.

**8.** Light modulation element according to at least one of Claims 1 to 7, **characterised in that**

- it comprises a further optical element, which is either a second element for polarisation of light, a reflector or a transflector or a combination of one or more of these elements.

**9.** Light modulation element according to at least one of Claims 1 to 8, **characterised in that**

- it comprises a second element for polarisation of light.

**10.** Light modulation element according to at least one of Claims 1 to 9, **characterised in that**

- it comprises a reflector.

**11.** Light modulation element according to at least one of Claims 1 to 9, **characterised in that**

- it comprises a transflector.

**12.** Light modulation element according to at least one of Claims 1 to 11, **characterised in that**

- the electrode arrangement comprises at least two parts at least one part each of which arrangement is located on either of the two sides of the layer of the mesogenic modulation medium.

**13.** Light modulation element according to at least one of Claims 1 to 12, **characterised in that**

- it contains one or more birefringent layers.

**14.** Light modulation element according to at least one of Claims 1 to 13, **characterised in that**

- it contains one λ/4 layer or a plurality of λ/4 layers.

**15.** Electro-optical display comprising one or more light modulation elements according to at least one of Claims 1 to 14.

**16.** Electro-optical display according to Claim 15, **characterised in that** the display is addressable by means of an active matrix.

**17.** Electro-optical display system containing one or more electro-optical displays according to at least one of Claims 15 and 16.

**18.** Electro-optical display system according to Claim 17, **characterised in that** it can be used as a television monitor and/or as a computer monitor.

**Patentansprüche**

**1.** Elektrooptisches Lichtmodulationselement, enthaltend

- eine Elektrodenanordnung,
- mindestens ein Element zur Polarisierung von Licht und
- ein mesogenes Modulationsmedium,

**dadurch gekennzeichnet, dass**

- das mesogene Modulationsmedium bei einer Temperatur von 20°C und bei einer Frequenz von 1 kHz eine negative dielektrische Anisotropie besitzt,
- das mesogene Modulationsmedium eine cybotaktische nematische Phase aufweist,
- das mesogene Modulationsmedium eine dielektrisch neutrale Komponente A enthaltend eine oder mehrere dielektrisch neutrale Verbindungen mit einem $\Delta\varepsilon$ im Bereich von $-1{,}5 \leq \Delta\varepsilon \leq 1{,}5$ und enthaltend zwei Ringe der Formel I

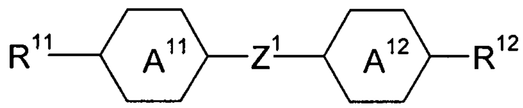

I

enthält, in der

$R^{11}$ und $R^{12}$ unabhängig voneinander Alkyl oder Alkoxy mit 1 bis 15 C-Atomen oder Alkoxyalkyl, Alkenyl, Alkenyloxy mit 2 bis 15 C-Atomen bedeuten,

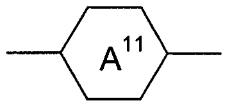

und

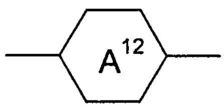

jeweils unabhängig voneinander

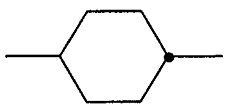

oder

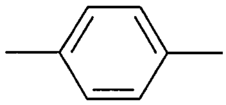

bedeuten,

$Z^1$ eine Einfachbindung oder -CH=CH- bedeutet,

- das mesogene Modulationsmedium eine dielektrisch negative Komponente, Komponente B, mit einem $\Delta\varepsilon$ im Bereich von $\Delta\varepsilon < -1{,}5$ und enthaltend eine oder mehrere Verbindungen mit negativer dielektrischer Anisotropie der Formel II

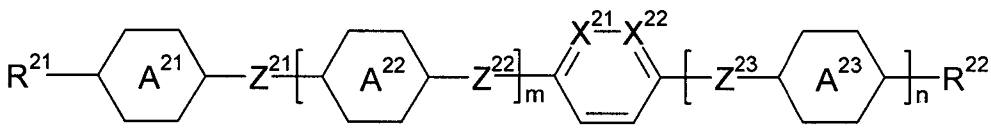

II

enthält, in der

$R^{21}$ und $R^{22}$ unabhängig voneinander Alkyl oder Alkoxy mit 1 bis 15 C-Atomen oder Alkoxyalkyl, Alkenyl, Alkenyloxy mit 1 bis 15 C-Atomen bedeuten,

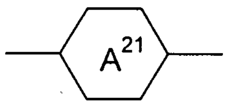

bis

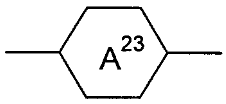

jeweils unabhängig voneinander

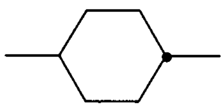 , 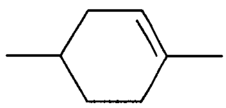 ,

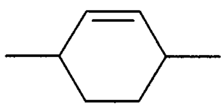 , 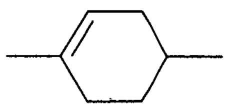 ,

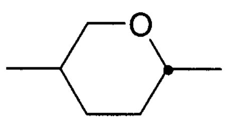 , 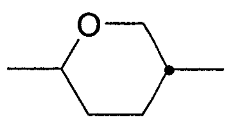 ,

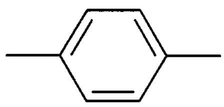, 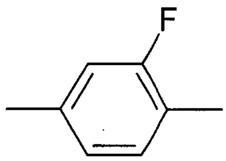,

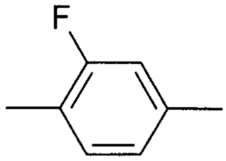, 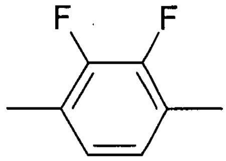,

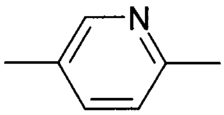 oder 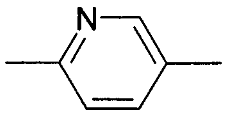

bedeuten,

$X^{21}$ und $X^{22}$ unabhängig voneinander C-F oder C-Cl, vorzugsweise C-F bedeuten oder eines von $X^{21}$ und $X^{22}$ auch N bedeuten kann, besonders bevorzugt bedeutet mindestens eines von ihnen C-F und insbesondere bevorzugt bedeuten sie beide C-F,

$Z^{21}$ und $Z^{22}$ jeweils unabhängig voneinander eine Einfachbindung, $-CH_2-CH_2-$, -CO-O-, trans-CH=CH-, -CH=CF-, -CF=CH-, -CF=CF-, -CH=CH-CO-O-, -CF=CF-CO-O-, -CF=CH-CO-O-, -CH=CF-CO-O-, $-CF_2-O-$, $-O-CF_2-$, $-CH_2-O-$, $-O-CH_2-$ oder $-C{\equiv}C-$ bedeuten und

m und n für 0, 1 oder 2 stehen,

während m + n 0, 1, 2 oder 3 ist,

- das Lichtmodulationselement bei einer Temperatur von 20°C und einer Wellenlänge von 589 nm eine optische Verzögerung im Bereich von 0,20 µm bis 0,50 µm besitzt und
- das Lichtmodulationselement für den Betrieb bei einer Temperatur ausgelegt ist, bei der das mesogene Modulationsmedium in der cybotaktischen nematischen Phase vorliegt.

2. Lichtmodulationselement nach Anspruch 1, **dadurch gekennzeichnet, dass**

- das Lichtmodulationselement bei einer Temperatur von 20°C und einer Wellenlänge von 589 nm eine optische Verzögerung im Bereich von 0,25 µm bis 0,40 µm besitzt.

3. Lichtmodulationselement nach Anspruch 2, **dadurch gekennzeichnet; dass**

- das Lichtmodulationselement bei einer Temperatur von 20°C und einer Wellenlänge von 589 nm eine optische Verzögerung im Bereich von 0,30 µm bis 0,35 µm besitzt.

4. Lichtmodulationselement nach Anspruch 3, **dadurch gekennzeichnet, dass**

- das Lichtmodulationselement bei einer Temperatur von 20°C und einer Wellenlänge von 589 nm eine optische Verzögerung von 0,32 µm besitzt.

5. Lichtmodulationselement nach mindestens einem der Ansprüche 1 bis 4, **dadurch gekennzeichnet, dass**

- das rnesogene Medium in Schichtform vorliegt.

6. Lichtmodulationselement nach mindestens einem der Ansprüche 1 bis 5, **dadurch gekennzeichnet, dass**

- sich das mesogene Medium zwischen zwei Substraten befindet,
- mindestens eines dieser beiden Substrate lichtdurchlässig ist und
- die Elektrodenanordnung in der Lage ist, ein elektrisches Feld mit einer wesentlichen Komponente senkrecht zur Oberfläche des mesogenen Modulationsmediums zu erzeugen.

**7.** Lichtmodulationselement nach mindestens einem der Ansprüche 1 bis 6, **dadurch gekennzeichnet, dass**

- das mesogene Modulationsmedium neben der cybotaktischen nematischen Phase zusätzlich eine nematische Phase aufweist.

**8.** Lichtmodulationselement nach mindestens einem der Ansprüche 1 bis 7, **dadurch gekennzeichnet, dass**

- es ein weiteres optisches Element enthält, bei dem es sich entweder um ein zweites Element zur Polarisierung von Licht, einen Reflektor oder einen Transflektor oder eine Kombination von einem oder mehreren dieser Elemente handelt.

**9.** Lichtmodulationselement nach mindestens einem der Ansprüche 1 bis 8, **dadurch gekennzeichnet, dass**

- es ein zweites Element zur Polarisierung von Licht enthält.

**10.** Lichtmodulationselement nach mindestens einem der Ansprüche 1 bis 9, **dadurch gekennzeichnet, dass**

- es einen Reflektor enthält.

**11.** Lichtmodulationselement nach mindestens einem der Ansprüche 1 bis 9, **dadurch gekennzeichnet, dass**

- es einen Transflektor enthält.

**12.** Lichtmodulationselement nach mindestens einem der Ansprüche 1 bis 11, **dadurch gekennzeichnet, dass**

- die Elektrodenanordnung mindestens zwei Teile enthält, wobei sich jeweils mindestens ein Teil der Anordnung auf den jeweiligen beiden Seiten der Schicht des mesogenen Modulationsmediums befindet.

**13.** Lichtmodulationselement nach mindestens einem der Ansprüche 1 bis 12, **dadurch gekennzeichnet, dass**

- es eine oder mehrere doppelbrechende Schichten enthält.

**14.** Lichtmodulationselement nach mindestens einem der Ansprüche 1 bis 13, **dadurch gekennzeichnet, dass**

- es eine $\lambda/4$-Schicht oder eine Mehrzahl von $\lambda/4$-Schichten enthält.

**15.** Elektrooptische Anzeige enthaltend ein oder mehrere Lichtmodulationselemente nach mindestens einem der Ansprüche 1 bis 14.

**16.** Elektrooptische Anzeige nach Anspruch 15, **dadurch gekennzeichnet, dass** die Anzeige mittels einer Aktivmatrix angesprochen werden kann.

**17.** Elektrooptisches Anzeigesystem enthaltend eine oder mehrere elektrooptische Anzeigen nach mindestens einem der Ansprüche 15 und 16.

**18.** Elektrooptisches Anzeigesystem nach Anspruch 17, **dadurch gekennzeichnet, dass** sie als Fernsehbildschirm und/oder als Computerbildschirm verwendet werden kann.

## Revendications

**1.** Elément de modulation de lumière électro-optique comprenant

- un agencement d'électrode,
- au moins un élément pour une polarisation de lumière et
- un milieu de modulation mésogène,

**caractérisé en ce que**

- le milieu de modulation mésogène a une anisotropie diélectrique négative à une température de 20°C et à une fréquence de 1 kHz,
- le milieu de modulation mésogène présente une phase nématique cybotactique,
- le milieu de modulation mésogène comprend un composant diélectriquement neutre A, comprenant un ou plusieurs composés diélectriquement neutres ayant un $\Delta\varepsilon$ dans la plage de $-1{,}5 \leq \Delta\varepsilon \leq 1{,}5$ et comprenant deux cycles de la formule I

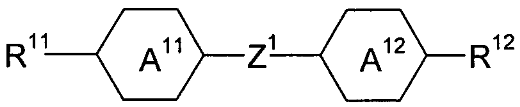

I

dans laquelle

$R^{11}$ et $R^{12}$ sont, indépendamment l'un de l'autre, alkyle or alcoxy avec 1 à 15 atomes de C ou alcoxyalkyle, alkényle, alkényloxy avec 2 à 15 atomes de C,

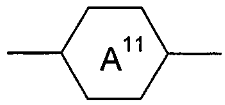

et

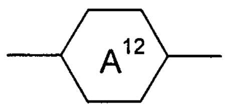

chacun, indépendamment l'un de l'autre, sont

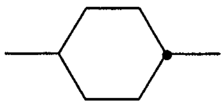 ou 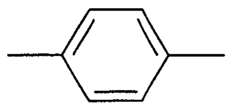 ,

$Z^1$ est une liaison simple ou -CH=CH-,

- le milieu de modulation mésogène comprend un composant diélectriquement négatif B ayant un $\Delta\varepsilon$ dans la plage de $-1{,}5 \leq \Delta\varepsilon \leq 1{,}5$, comprenant de un ou plusieurs composés avec une anisotropie diélectrique négative de la formule II

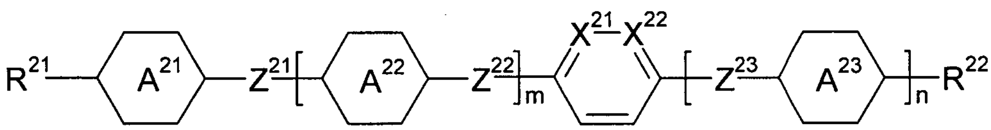

II

dans laquelle

$R^{21}$ et $R^{22}$ sont, indépendamment l'un de l'autre, alkyle ou alcoxy avec 1 à 15 atomes de C ou alcoxyalkyle, alkényle, alkényloxy avec 1 à 15 atomes de C,

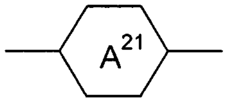

à

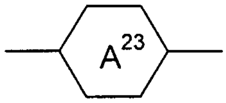

chacun, indépendamment de l'autre, sont

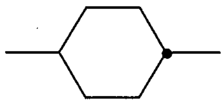 , 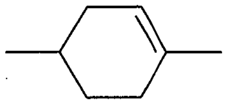 ,

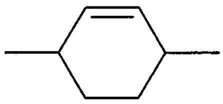 , 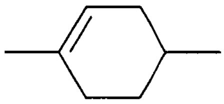 ,

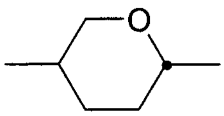 , 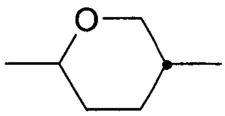 ,

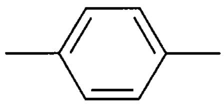 , 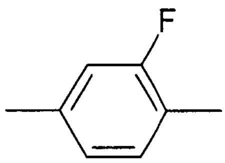 ,

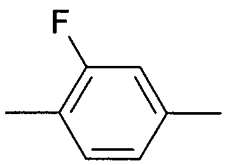 , 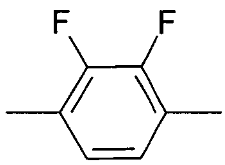 ,

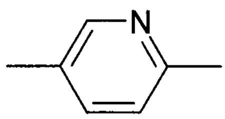 ou 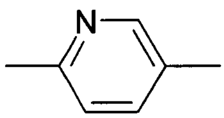 ,

$X^{21}$ et $X^{22}$ sont, indépendamment l'un de l'autre, C-F ou C-Cl, de préférence C-F, en alternative un de $X^{21}$ et $X^{22}$ peut également être N, de façon plus préférable au moins l'un d'eux est C-F et de façon la plus préférable les deux sont C-F,

$Z^{21}$ et $Z^{22}$ sont chacun, indépendamment l'un de l'autre, une liaison simple, $-CH_2-CH_2-$, -CO-O-, trans -CH=CH-, -CH=CF-, -CF=CH-, -CF=CF-, -CH=CH-CO-O-,-CF=CF-CO-O-, -CF=CH-CO-O-, -CH=CF-CO-O-, $-CF_2-O-$, $-O-CF_2-$, $-CH_2-O-$, $-O-CH_2-$ or -C≡C-, et

m et n sont 0, 1 ou 2,

tandis que m + n est 0, 1, 2 ou 3,
- l'élément de modulation de lumière a un retardement optique à une température de 20°C et une longueur d'onde 589 nm dans la plage de 0.20 μm à 0.50 μm et
- l'élément de modulation de lumière est agencé pour être opérant à une température à laquelle le milieu de modulation mésogène est dans ladite phase nématique cybotactique.

2. Elément de modulation de lumière selon la revendication 1, **caractérisé en ce que**

- l'élément de modulation de lumière a un retardement optique à une température de 20°C et une longueur d'onde 589 nm dans la plage de 0.25 μm à 0.40 μm.

3. Elément de modulation de lumière selon la revendication 2, **caractérisé en ce que**

- l'élément de modulation de lumière a un retardement optique à une température de 20°C et une longueur d'onde 589 nm dans la plage de 0.30 μm à 0.35 μm.

4. Elément de modulation de lumière selon la revendication 3, **caractérisé en ce que**

- l'élément de modulation de lumière a un retardement optique à une température de 20°C et une longueur d'onde 589 nm de 0.32 μm.

5. Elément de modulation de lumière selon au moins l'une des revendications 1 à 4, **caractérisé en ce que**

- le milieu mésogène est présent sous la forme d'une couche.

6. Elément de modulation de lumière selon au moins l'une des revendications 1 à 5, **caractérisé en ce que**

- le milieu mésogène est situé entre deux substrats,
- au moins l'un de ces deux substrats est transparent à la lumière et
- l'agencement d'électrode est capable de générer un champ électrique ayant une composante significative perpendiculaire à la surface du milieu de modulation mésogène.

7. Elément de modulation de lumière selon au moins l'une des revendications 1 à 6, **caractérisé en ce que**

- le milieu de modulation mésogène présente additionnellement une phase nématique au delà de la phase nématique cybotactique.

8. Elément de modulation de lumière selon au moins l'une des revendications 1 à 7, **caractérisé en ce que**

- il comprend un élément optique supplémentaire, lequel est soit un second élément pour la polarisation de la lumière, soit un réflecteur ou un transflecteur, soit une combinaison d'un ou plusieurs de ces éléments.

9. Elément de modulation de lumière selon au moins l'une des revendications 1 à 8, **caractérisé en ce que**

- il comprend un second élément pour la polarisation de lumière.

10. Elément de modulation de lumière selon au moins l'une des revendications 1 à 9, **caractérisé en ce que**

- il comprend un réflecteur.

11. Elément de modulation de lumière selon au moins l'une des revendications 1 à 9, **caractérisé en ce que**

- il comprend un transflecteur.

12. Elément de modulation de lumière selon au moins l'une des revendications 1 à 11, **caractérisé en ce que**

- l'agencement d'électrode comprend au moins deux parties dont au moins une partie de chaque agencement est située sur l'un des côtés ou sur les deux côtés de la couche du milieu de modulation mésogène.

**13.** Elément de modulation de lumière selon au moins l'une des revendications 1 à 12, **caractérisé en ce que**

- il contient une ou plusieurs couches biréfringentes.

**14.** Elément de modulation de lumière selon au moins l'une des revendications 1 à 13, **caractérisé en ce que**

- il contient une couche $\lambda/4$ ou une pluralité de couches $\lambda/4$.

**15.** Affichage électro-optique comprenant un ou plusieurs éléments de modulation de lumière selon au moins l'une des revendications 1 à 14.

**16.** Affichage électro-optique selon la revendication 15, **caractérisé en ce que** l'affichage est adressable au moyen d'une matrice active.

**17.** Système d'affichage électro-optique contenant un ou plusieurs affichages électro-optiques selon au moins l'une des revendications 15 et 16.

**18.** Système d'affichage électro-optique selon la revendication 17, **caractérisé en ce qu'**il peut être utilisé comme moniteur de télévision et/ou moniteur d'ordinateur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 4000451
- EP 0588568 A
- DE 2644219
- EP 1352943 A
- WO 2005096085 A
- US P4099857 A

### Non-patent literature cited in the description


- *Pure and Applied Chemistry,* 2001, vol. 73, 845-895
- **BOBADOVA-PARVANOVA, P. et al.** *Cryst. Res. Technol.,* 2000, vol. 35, 1321-1330
- **LÜNING, J. et al.** *Macromolecules,* 2001, vol. 34, 1128-1130
- **STOJADINOVICH, S. et al.** *Physical Review E,* 2002, vol. 66, 060701-1
- **MARGERUM, J.D. et al.** Effects of molecular length on nematic mixtures. II. Anisotropic and dynamic scattering properties of 4-alkoxyphenyl 4-alkylcyclohexanecarboxylate mixtures. *Molecular Crystals and Liquid Crystals,* 1981, vol. 68, 157-174
- **TAKEDA, A. et al.** A Super-High Image Quality Multi-Domain Vertical Aligned LCD by New Rubbing-Less technology. *International Proceedings of the SID, Digest of technical Papers, SID, Los Angeles,* 1998, 1077-1080
- *Merck Liquid Crystals, Physical Properties of Liquid Crystals,* November 1997